# EUROPEAN PATENT APPLICATION

(11) **EP 4 832 384 A1**
(43) Date of publication of application: **28.10.2026**
(21) Application number: 25738378.6
(22) Date of filing: 06.01.2025
(51) Int. Cl.: H04L 1/00

(54) **COMMUNICATION METHOD, APPARATUS, DEVICE, AND STORAGE MEDIUM**

(30) Priority: 10.01.2024 CN 202410042932
(71) Applicant: Huawei Technologies Co., Ltd., Shenzhen, Guangdong 518129 (CN)
(72) Inventor: MONTORSI, Guido, 10131 Torino (IT); BENEDETTO, Sergio, 10122 Torino (IT); LIN, Wei, Shenzhen, Guangdong 518129 (CN); XIN, Yan, Shenzhen, Guangdong 518129 (CN); LI, Ying, Shenzhen, Guangdong 518129 (CN); YANG, Xun, Shenzhen, Guangdong 518129 (CN)
(74) Representative: Isarpatent
(86) International application number: PCT/CN2025/070870
(87) International publication number: WO 2025/148847

(57) **Abstract**

This application provides a communication method, apparatus, and device, and a storage medium. The method includes: determining, based on a 16*32 base matrix, a parity check matrix corresponding to a target code length, and sending first information obtained through encoding based on the parity check matrix, where a first base matrix supporting a first code length is associated with a second base matrix supporting a second code length, for example, a position of a cyclic shift matrix represented by a first element in the first base matrix is the same as a position of a cyclic shift matrix represented by a first element in the second base matrix. This reduces processing complexity of determining a parity check matrix by a communication device, improving data transmission reliability of a system. Further, in embodiments of this application, in the parity check matrix determined based on the 16*32 base matrix, the 1^{st} element in the 17^{th} column is zero, the x^{th} element and the 16^{th} element in the 17^{th} column are same non-zero elements, and x is an integer greater than 1 and less than 16, improving encoding flexibility.

## Description

This application claims priority to Chinese Patent Application No. 202410042932.6, filed with the China National Intellectual Property Administration on January 10, 2024 and entitled "COMMUNICATION METHOD, APPARATUS, AND DEVICE, AND STORAGE MEDIUM", which is incorporated herein by reference in its entirety.

### TECHNICAL FIELD

This application relates to the field of communication technologies, and in particular, to a communication method, apparatus, and device, and a storage medium.

### BACKGROUND

Wireless local area network (wireless local area networks, WLAN) transmission standards such as the Institute of Electrical and Electronics Engineers (Institute of Electrical and Electronics Engineers) 802.11n/ac/ax/be mainly focus on improving user experience in high bandwidth (for example, 60 gigahertz (GHz)) scenarios, including improving an average user throughput and energy efficiency of a battery-powered device. In a high bandwidth scenario, high-speed and reliable transmission of services such as data and video needs to be supported under limited frequency and power resources. Therefore, a highly reliable and efficient channel encoding and decoding scheme is required.

In the field of channel encoding, concatenated codes (such as Turbo codes) and low-density parity-check (low-density parity-check, LDPC) codes are two most mature and widely used channel encoding schemes currently, both having performance approaching the Shannon (Shannon) limit. Compared with the concatenated codes, the LDPC codes may have the following advantages: good bit error performance without a deep interleaver, better frame error rate performance, significantly lower error floor, non-trellis-based decoding, support for parallel decoding, small decoding delay, and the like. Therefore, the LDPC codes have become a standard channel encoding scheme for low-frequency short-range WLAN communication systems such as IEEE 802.11n/ac/ax systems.

How to further improve decoding performance of the LDPC codes needs to be urgently resolved.

### SUMMARY

Embodiments of this application provide a communication method, apparatus, and device, and a storage medium, to improve decoding performance of LDPC codes, and further improve transmission reliability of a wireless transmission system.

According to a first aspect, this application provides a communication method. The method may be performed by a first communication apparatus. The first communication apparatus may include a Wi-Fi device, a chip or a functional module disposed in a Wi-Fi device, or the like.

For example, the method includes: A first communication apparatus determines, based on a 16*32 base matrix, a parity check matrix corresponding to a target code length, and sends first information obtained through encoding based on the parity check matrix, where a first base matrix supporting a first code length is associated with a second base matrix supporting a second code length, for example, a position of a cyclic shift matrix represented by a first element in the first base matrix is the same as a position of a cyclic shift matrix represented by a first element in the second base matrix. This reduces processing complexity of determining a parity check matrix by a communication device, improving data transmission reliability of a system.

Further, in embodiments of this application, in the parity check matrix determined based on the 16*32 base matrix, the 1^{st} element in the 17^{th} column is zero, the x^{th} element and the 16^{th} element in the 17^{th} column are same non-zero elements, and x is an integer greater than 1 and less than 16, improving encoding flexibility.

According to a second aspect, this application provides a communication method. The method may be performed by a second communication apparatus. The second communication apparatus may include a Wi-Fi device, a chip or a functional module disposed in a Wi-Fi device, or the like.

For example, the method includes: A second communication apparatus receives first information, where the first information is obtained through encoding based on a parity check matrix of a target code length, and determines the parity check matrix based on a 16*32 base matrix, where the base matrix includes a plurality of first elements, the first element corresponds to a cyclic shift matrix, a position of the first element in a first base matrix is the same as a position of the first element in a second base matrix, the first base matrix is used to determine a parity check matrix corresponding to a first code length, the second base matrix is used to determine a parity check matrix corresponding to a second code length, the target code length includes the first code length or the second code length, the 1^{st} element in the 17^{th} column of the base matrix is zero, the x^{th} element and the 16^{th} element in the 17^{th} column of the base matrix are same non-zero elements, and x is an integer greater than 1 and less than 16.

With reference to the first aspect or the second aspect, in a possible implementation, the base matrix may be represented as: 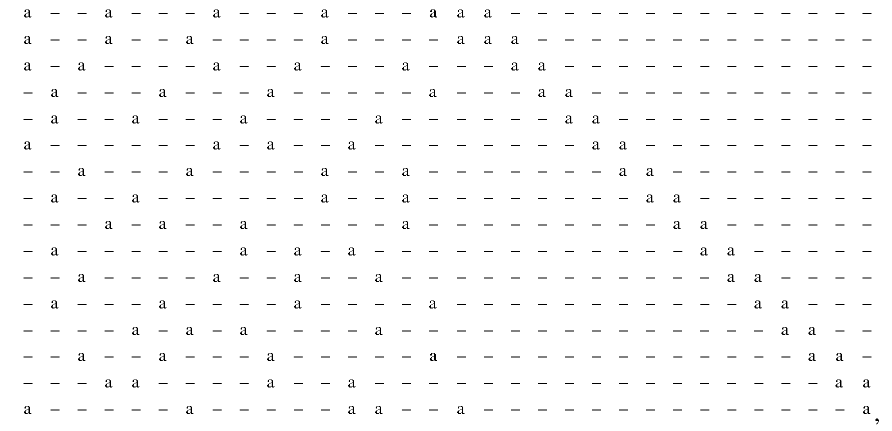 or 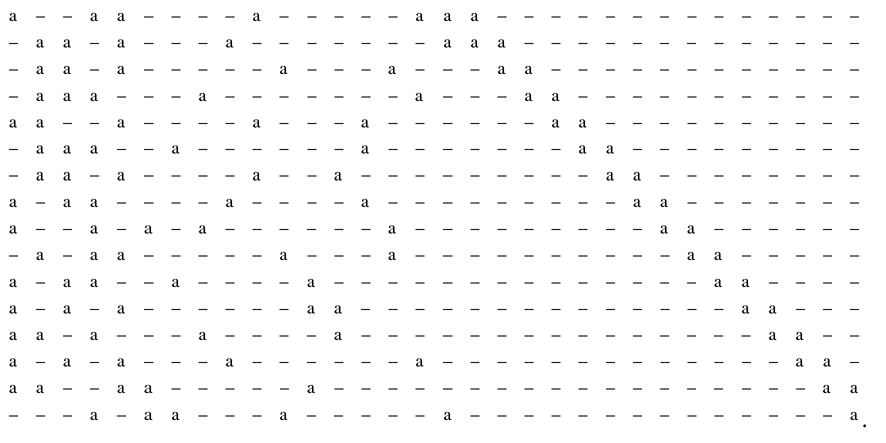 a indicates presence of a z*z cyclic shift identity matrix at a corresponding element position, z is a lifting factor, and - indicates an all-zero matrix.

In the foregoing two examples of positions of the first elements, a row weight and a column weight vary between the base matrices. Decoding complexity varies when the row weight and the column weight vary. Therefore, in this implementation, the foregoing two possible base matrices are proposed for different decoding complexity.

With reference to the first aspect or the second aspect, in a possible implementation, z is 10, and the base matrix may be represented as: 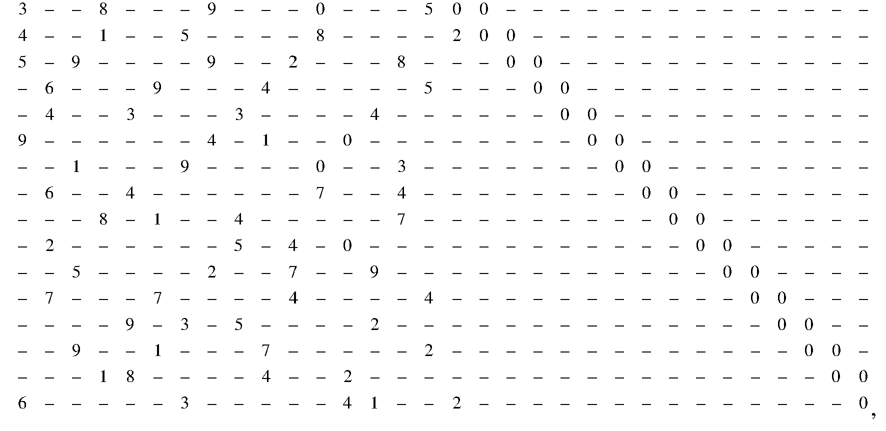 or

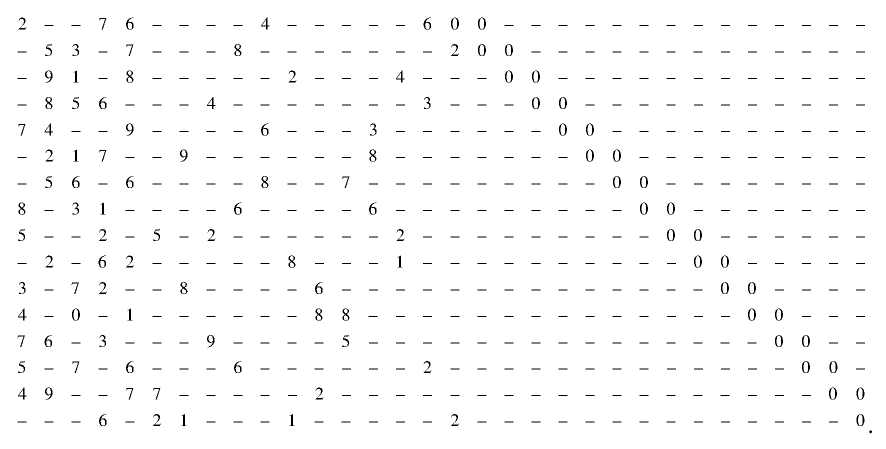

With reference to the first aspect or the second aspect, in a possible implementation, z is 20, and the base matrix may be represented as: 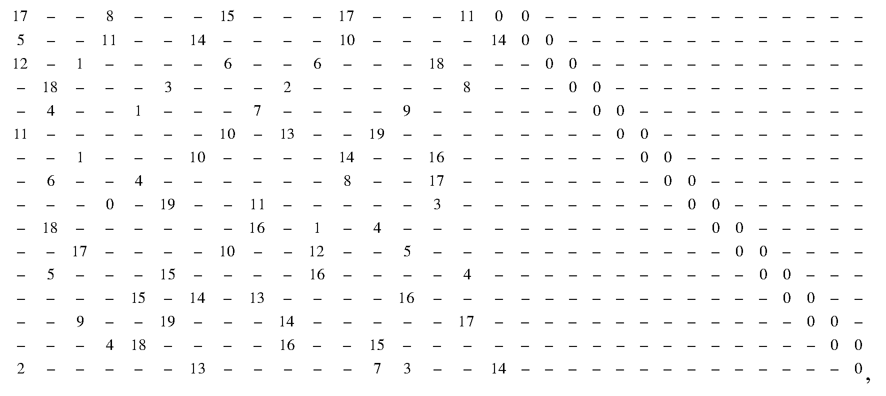 or

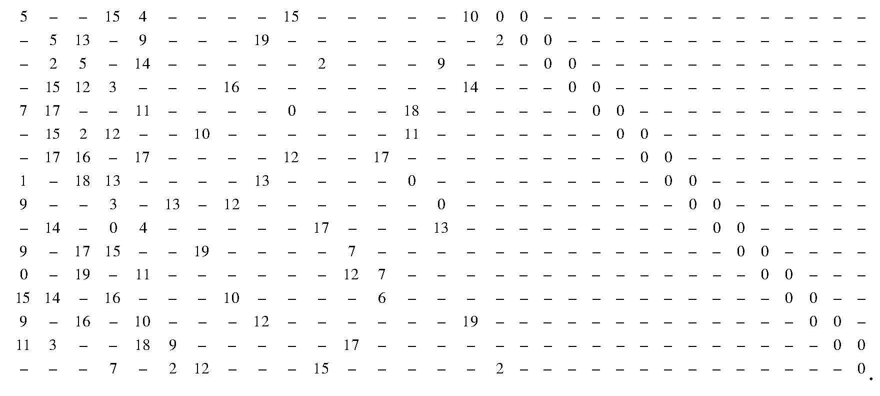

With reference to the first aspect or the second aspect, in a possible implementation, z is 40, and the base matrix may be represented as: 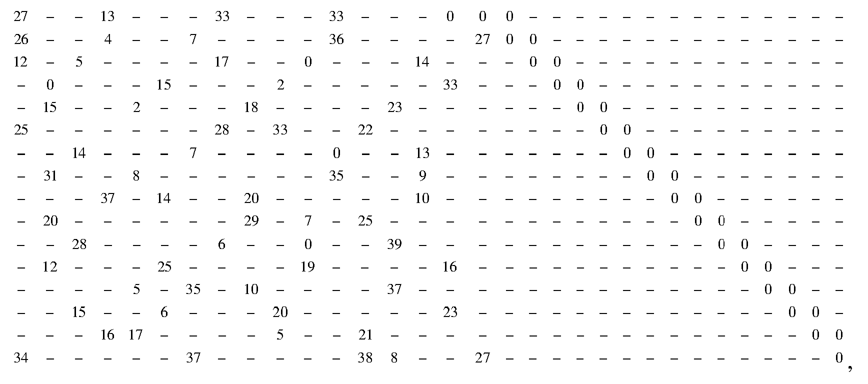 or

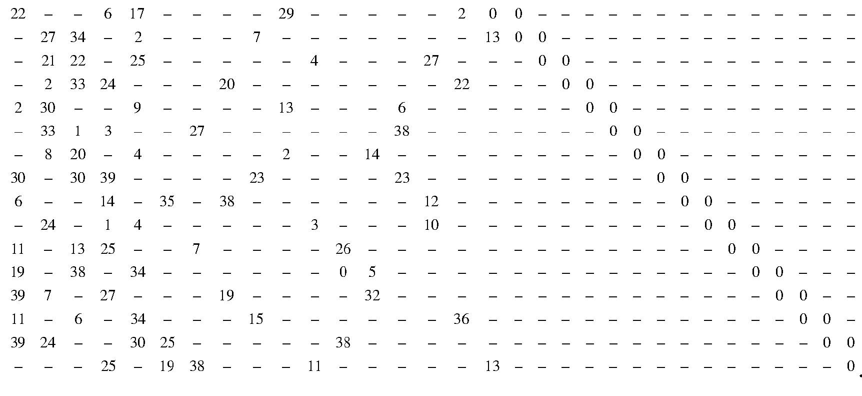

With reference to the first aspect or the second aspect, in a possible implementation, z is 60, and the base matrix may be represented as: 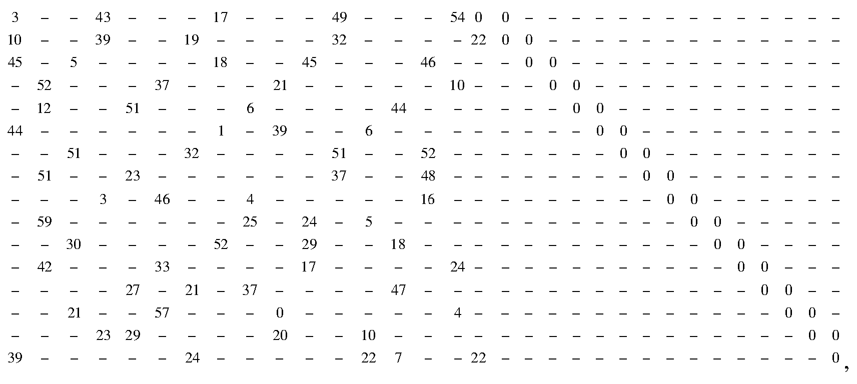 or

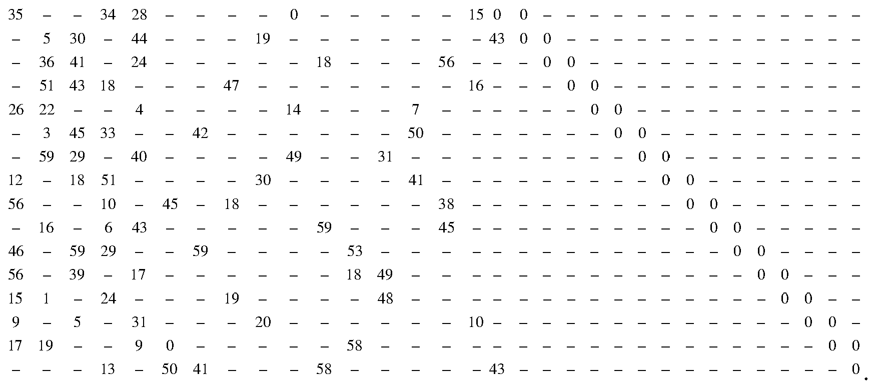

With reference to the first aspect or the second aspect, in a possible implementation, z is 80, and the base matrix may be represented as: 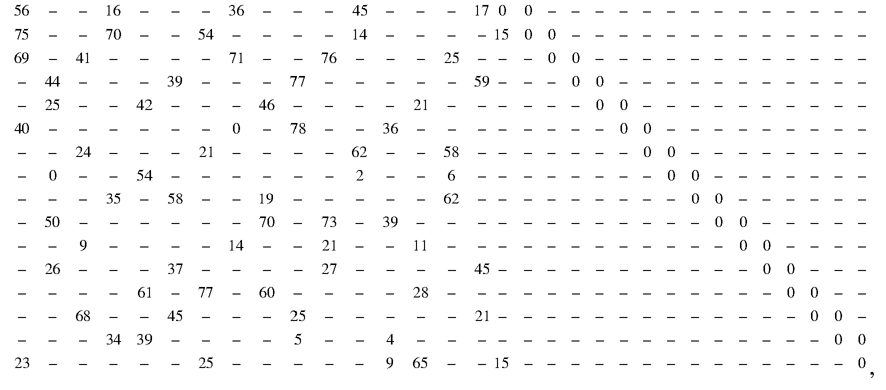 or

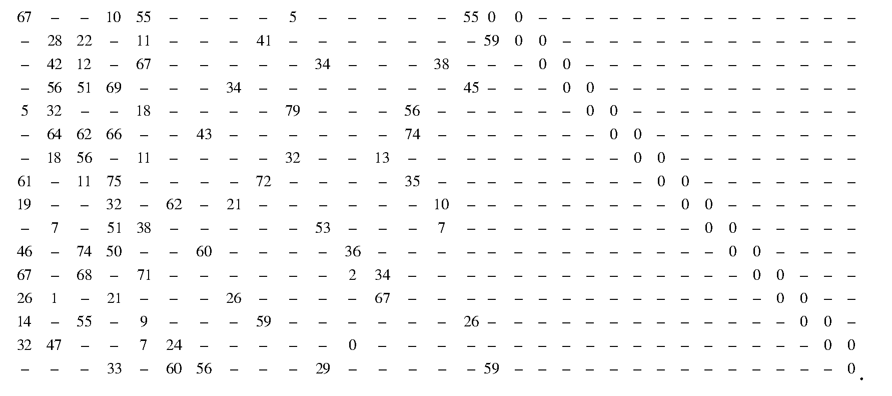

According to a third aspect, an embodiment of this application provides a first communication apparatus, configured to perform the method in the first aspect or any possible implementation thereof. The first communication apparatus includes a module configured to perform the method according to the first aspect or any possible implementation thereof.

According to a fourth aspect, an embodiment of this application provides a second communication apparatus, configured to perform the method according to the second aspect or any possible implementation thereof. The second communication apparatus includes a module configured to perform the method according to the second aspect or any possible implementation thereof.

According to a fifth aspect, an embodiment of this application provides a first communication apparatus. The first communication apparatus includes a processor configured to perform the method according to the first aspect or any possible implementation thereof. The processor is configured to execute a program stored in a memory. When the program is executed, the method according to the first aspect or any possible implementation thereof is performed.

In a possible implementation, the memory is located outside the first communication apparatus.

In a possible implementation, the memory is located inside the first communication apparatus.

In this embodiment of this application, the processor and the memory may alternatively be integrated into one component. In other words, the processor and the memory may alternatively be integrated together. For example, the first communication apparatus may be a chip.

In a possible implementation, the first communication apparatus further includes a transceiver. The transceiver is configured to receive information or send information.

According to a sixth aspect, an embodiment of this application provides a second communication apparatus. The second communication apparatus includes a processor configured to perform the method according to the second aspect or any possible implementation thereof. The processor is configured to execute a program stored in a memory. When the program is executed, the method according to the second aspect or any possible implementation thereof is performed.

In a possible implementation, the memory is located outside the second communication apparatus.

In a possible implementation, the memory is located inside the second communication apparatus.

In this embodiment of this application, the processor and the memory may alternatively be integrated into one component. In other words, the processor and the memory may alternatively be integrated together. For example, the second communication apparatus may be a chip.

In a possible implementation, the second communication apparatus further includes a transceiver. The transceiver is configured to receive information or send information.

According to a seventh aspect, an embodiment of this application provides a first communication apparatus. The first communication apparatus includes a logic circuit and an interface. The logic circuit is coupled to the interface. The interface is configured to input and/or output information. The logic circuit is configured to perform the method according to the first aspect or any possible implementation thereof.

According to an eighth aspect, an embodiment of this application provides a second communication apparatus. The second communication apparatus includes a logic circuit and an interface. The logic circuit is coupled to the interface. The interface is configured to input and/or output information. The logic circuit is configured to perform the method according to the second aspect or any possible implementation thereof.

According to a ninth aspect, an embodiment of this application provides a computer-readable storage medium. The computer-readable storage medium is configured to store a computer program, and when the computer program is run on a computer, the method according to any one of the first aspect and the second aspect or any possible implementation thereof is performed.

According to a tenth aspect, an embodiment of this application provides a computer program product. When the computer program product runs on a computer, the method according to any one of the first aspect and the second aspect or any possible implementation thereof is performed.

According to an eleventh aspect, an embodiment of this application provides a computer program. When the computer program is run on a computer, the method according to any one of the first aspect and the second aspect or any possible implementation thereof is performed.

According to a twelfth aspect, an embodiment of this application provides a communication system. The communication system includes a first communication apparatus and/or a second communication apparatus, the first communication apparatus is configured to perform the method according to the first aspect or any possible implementation of the first aspect, and the second communication apparatus is configured to perform the method according to the second aspect or any possible implementation of the second aspect.

For beneficial effects of the content in the second aspect to the twelfth aspect and the possible implementations, refer to the beneficial effects brought by the first aspect and the possible implementations of the first aspect. Details are not described herein again.

### BRIEF DESCRIPTION OF DRAWINGS

FIG. 1a is a diagram of a matrix prototype of a reference parity check matrix according to an embodiment of this application;
FIG. 1b is a diagram of a CPM according to an embodiment of this application;
FIG. 2a is a diagram of an architecture of a communication system according to an embodiment of this application;
FIG. 2b is a diagram of an architecture of a communication system according to an embodiment of this application;
FIG. 2c is a diagram of an architecture of a communication system according to an embodiment of this application;
FIG. 3 is a schematic interaction flowchart of a communication method according to an embodiment of this application;
FIG. 4 is a partial diagram of a shortening operation in LDPC encoding according to an embodiment of this application;
FIG. 5a is a diagram of element positions in a base matrix according to an embodiment of this application;
FIG. 5b is another diagram of element positions in a base matrix according to an embodiment of this application;
FIG. 6a is a diagram of a parity check matrix according to an embodiment of this application;
FIG. 6b is a diagram of a factor graph according to an embodiment of this application;
FIG. 7a is a diagram of decoding performance according to an embodiment of this application;
FIG. 7b is a diagram of decoding performance according to an embodiment of this application;
FIG. 7c is a diagram of decoding performance according to an embodiment of this application;
FIG. 7d is a diagram of decoding performance according to an embodiment of this application;
FIG. 8a is a diagram of decoding performance according to an embodiment of this application;
FIG. 8b is a diagram of decoding performance according to an embodiment of this application;
FIG. 8c is a diagram of decoding performance according to an embodiment of this application;
FIG. 9a is a diagram of performance comparison between parity check matrices according to an embodiment of this application;
FIG. 9b is a diagram of performance comparison between parity check matrices according to an embodiment of this application;
FIG. 9c is a diagram of performance comparison between parity check matrices according to an embodiment of this application;
FIG. 9d is a diagram of performance comparison between parity check matrices according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

For ease of understanding technical solutions in this application, the following further describes this application with reference to accompanying drawings.

In the specification, claims, and the accompanying drawings of this application, terms such as "first" and "second" are only intended to distinguish between different objects but do not describe a particular order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described with reference to embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression thereof means any combination of these items. For example, at least one of a, b, or c may represent: a, b, c, "a and b", "a and c", "b and c", or "a, b, and c".

LDPC codes used in the IEEE 802.11ac/ax standard are quasi-cyclic (quasi cyclic, QC) LDPC (QC-LDPC) codes. The QC-LDPC codes are structured LDPC codes that are widely used. A parity check matrix of the QC-LDPC codes has a unique structure, and encoding may be implemented by using a simple feedback shift register, addressing encoding complexity of LDPC codes.

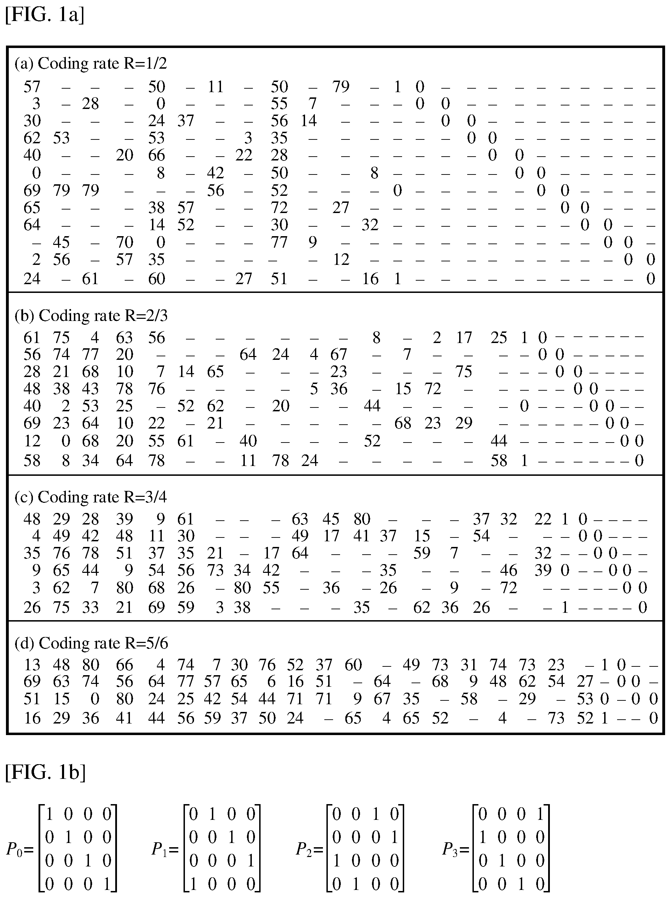

Currently, a total of 12 LDPC code parity check matrices are adopted in the standards. There are three code lengths N: N=648, N=1296, or N=1944. Each code length may support four different coding rates (coding rate): 1/2, 2/3, 3/4, and 5/6. A matrix prototype of a parity check matrix varies between each code length and coding rate, and parity check bit parts (a matrix corresponding to parity check bits or a check square matrix shown below) in matrix prototypes of the 12 parity check matrices with different code lengths and coding rates have a same structure. For example, selection of a coding rate may be determined by a current transmission system based on a modulation and coding scheme (modulation and coding scheme, MCS) selected according to link adaptation. Therefore, in a conventional WLAN, a communication apparatus may select a parity check matrix from the 12 parity check matrices based on a given code length and a given coding rate. Having a same structure as described above may be understood as that in parity check bit parts in matrix prototypes of different parity check matrices in FIG. 1a, elements in the 1^{st} row and the 1^{st} column are all 1, and elements in the last row and the 1^{st} column are all 1.

FIG. 1a shows a matrix prototype of an LDPC code parity check matrix with a code length N=1944 and different coding rates. "-" in FIG. 1a represents a Z*Z all-zero matrix, "0" in FIG. 1a represents a Z*Z identity matrix, and a non-zero element in FIG. 1a represents a cyclic shift matrix (circulant permutation matrix, CPM) of a Z*Z identity matrix. For example, CPM is represented by Pᵢ, where i represents a cyclic shift value, a quantity of positions by which an identity matrix is cyclically shifted to the right, a CPM coefficient, an element greater than or equal to 0 in a matrix prototype of a parity check matrix, or the like. A specific name of i is not limited in embodiments of this application. i is a non-negative integer, for example, 0 ≤ i ≤ Z - 1. When i=0, the CPM may be understood as a Z*Z identity matrix, or a CPM whose cyclic shift value is 0. For example, Z=N/24. The foregoing "24" may be the same as a quantity of columns of a matrix prototype of a parity check matrix in the IEEE 802.11ac/ax standards. For the IEEE 801.11ac/ax, regardless of the code length N=648, N=1296, or N=1944, the quantity of columns of the matrix prototype of the parity check matrix remains 24.

For example, an element "1" (that is, i=1) in FIG. 1a is used as an example. The element 1 may be lifted to an 81*81 (1944/24=81) CPM. The CPM may be obtained through lifting by cyclically shifting the identity matrix to the right by one position, as shown in the following: $\left[\begin{matrix}0 & 1 & 0 & ⋯ & 0 \\ 0 & 0 & 1 & ⋯ & 0 \\ ⋮ & ⋮ & ⋮ & ⋱ & ⋮ \\ 0 & 0 & 0 & ⋯ & 1 \\ 1 & 0 & 0 & ⋯ & 0\end{matrix}\right]$ (1)

For example, a 4*4 CPM is used as an example. FIG. 1b shows a CPM with i=0, a CPM with i=1, a CPM with i=2, and a CPM with i=3. The CPMs shown in FIG. 1b are merely examples. For another CPM of a Z*Z identity matrix in embodiments of this application, a final Pi may be obtained by referring to the principle shown in FIG. 1a or FIG. 1b. Details are not described herein again.

As described above, to improve transmission reliability of a wireless transmission system, the LDPC codes have been widely used in WLAN standards. Compared with the IEEE 802.15.az standard, the new IEEE 802.15ab standard may introduce a new LDPC encoding technology, to further improve data transmission reliability of a system. For example, short, medium, and long packets, such as 20, 100, and 1500 bytes (bytes), may be simultaneously transmitted in a UWB system. If an IEEE 802.11n LDPC code is reused in the UWB system, three different LDPC parity check matrices need to be introduced for one coding rate (for example, the coding rate 1/2), to implement LDPC codes of three code lengths (for example, 648, 1296, and 1944 bits). However, implementing three parity check matrices simultaneously causes high complexity of a channel encoding module of the system, and high requirements raised by LDPC channel encoding in next-generation UWB transmission on low power consumption, low delay, and low implementation complexity of an encoder and a decoder cannot be met.

In view of this, an embodiment of this application provides a new LDPC code, and the LDPC code may support different code lengths. In embodiments of this application, a first base matrix supporting a first code length is associated with a second base matrix supporting a second code length, for example, a position of a cyclic shift matrix represented by "0" or a non-zero element in the first base matrix is the same as a position of a cyclic shift matrix represented by "0" or a non-zero element in the second base matrix. This reduces processing complexity of determining a parity check matrix by a communication device, improving data transmission reliability of a system.

Further, in embodiments of this application, in the parity check matrix determined based on the 16*32 base matrix, the 1^{st} element in the 17^{th} column is zero, the x^{th} element and the 16^{th} element in the 17^{th} column are same non-zero elements, and x is an integer greater than 1 and less than 16, improving encoding flexibility.

In embodiments of this application, each matrix shown below may be referred to as a prototype of a parity check matrix, a matrix prototype of a parity check matrix (matrix prototypes of the parity-matrices), a matrix prototype for a codeword block length N (matrix prototypes for codeword block length N), a mother matrix, a base matrix, or the like. A specific name of the matrix in embodiments of this application is not limited in embodiments of this application. Generally, a matrix that includes an element 0 and an element 1 and that is obtained through lifting based on Z and a cyclic shift value i is referred to as a parity check matrix. Therefore, each matrix shown below may also be referred to as a matrix prior to CPM lifting, and the like. The matrix shown in Example 1 or Example 2 below may be referred to as a base matrix of a parity check matrix, and a matrix obtained through lifting elements in the matrix shown in Example 1 or Example 2 may be referred to as a parity check matrix. For a specific lifting method, refer to the foregoing related descriptions about FIG. 1a. Specific content of the parity check matrix obtained through lifting is not enumerated in embodiments of this application.

The code length in embodiments of this application may alternatively be referred to as a codeword block length (a codeword block length) or the like. A specific name of the code length is not limited in embodiments of this application. Z in embodiments of this application may be referred to as a subblock size (subblock size), a lifting factor, a lift factor (lift factor), or the like. A specific name of Z is not limited in embodiments of this application. For ease of description, an example in which Z is referred to as a lifting factor is used below for description.

Generally, Z = N/24. However, with evolution of standards, a subsequent method for calculating Z may also change. This is not limited in embodiments of this application. For ease of understanding, in embodiments of this application, different alphabetic parameters are used to represent different meanings. For example, N represents a code length, Z represents a lifting factor, R represents a coding rate, K represents a quantity of information bits, and E represents a quantity of parity check bits. However, the alphabetic parameters shown in embodiments of this application are merely examples, and should not be construed as a limitation on embodiments of this application.

The following describes a communication system in embodiments of this application.

Technical solutions provided in embodiments of this application may be applied to a wireless local area network (wireless local area network, WLAN) system, for example, Wi-Fi. The method provided in embodiments of this application may be applicable to the Institute of Electrical and Electronics Engineers IEEE 802.11 series protocols, for example, the 802.11be protocol, the 802.11bn protocol, or a next-generation protocol of the 802.11bn protocol. Examples are not enumerated. The technical solutions provided in embodiments of this application may be further applied to a wireless personal area network (wireless personal area network, WPAN) based on millimeter wave (millimeter wave, MMW) and ultra-wideband (ultra-wideband, UWB) technologies. For example, the method provided in embodiments of this application is applicable to IEEE 802.15 series protocols, for example, the 802.15.4a protocol, the 802.15.4z protocol, the 802.15.4ab protocol, or a future generation UWB WPAN protocol. Examples are not enumerated. The technical solutions provided in embodiments of this application may be further applied to the following communication systems, for example, an internet of things (internet of things, IoT) system, vehicle-to-everything (vehicle-to-everything, V2X, where X may represent everything), device-to-device (device-to-device, D2D), a narrow band internet of things (narrow band internet of things, NB-IoT) system, a long term evolution (long term evolution, LTE) system, a 5th generation (5th generation, 5G) communication system, a new communication system emerging in future communication development, and the like. For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

The WLAN system may provide high-rate and low-latency transmission. With continuous evolution of WLAN application scenarios, the WLAN system is to be applied to more scenarios or industries, for example, an internet of things industry, an internet of vehicles industry, a banking industry, enterprise offices, stadiums and exhibition halls, concert halls, hotel rooms, dormitories, wards, classrooms, supermarkets, squares, streets, production workshops, and warehousing. Certainly, a device (for example, an access point or a station) that supports WLAN communication or sensing may be a sensor node (for example, a smart water meter, a smart electricity meter, or a smart air detection node) in smart city, a smart device (for example, a smart camera, a projector, a display, a television, a speaker, a refrigerator, and a washing machine) in smart home, an internet of things node, an entertainment terminal (for example, a wearable device like an augmented reality (augmented reality, AR) device or a virtual reality (virtual reality, VR) device), a smart device (for example, a printer, a projector, a loudspeaker, or a speaker) in smart office, an internet of vehicles device in the internet of vehicles, an infrastructure in a daily life scenario (for example, a vending machine, a self-service navigation console of a supermarket, a self-service cashier device, and a self-service ordering machine), a device in a large sports and music venue, and the like.

The UWB technology has merits such as low system complexity, low power spectrum density of transmit signals, insensitivity to channel fading, poor interception capability, and high positioning accuracy. It is especially applicable to high-speed wireless access in densely populated multi-path places such as indoor areas. The method provided in this application may be implemented by a communication apparatus in a wireless communication system. The communication apparatus may be an apparatus in a UWB system. For example, the communication apparatus may include but is not limited to a communication server, a router, a switch, a bridge, a computer, a mobile phone, and the like that support a UWB technology. For another example, the communication apparatus may include user equipment (user equipment, UE). The user equipment may include various devices that support the UWB technology, such as a handheld device, a vehicle-mounted device (for example, a vehicle or a component mounted in a vehicle), a wearable device, an internet of things (internet of things, IoT) device, a compute device, or another processing device connected to a wireless modem. Examples are not enumerated herein. For another example, the communication apparatus may include a central control point, for example, a personal area network (personal area network, PAN) or a PAN coordinator. The PAN coordinator or the PAN may be a mobile phone, a vehicle-mounted device, an anchor (Anchor), a tag (tag), a smart home device, or the like. For another example, the communication apparatus may include a chip, and the chip may be disposed in a communication server, a router, a switch, a terminal device, or the like. Examples are not enumerated herein.

In a possible implementation, the method provided in embodiments of this application may be implemented by a communication apparatus in a communication system. For example, the communication apparatus may be an access point (access point, AP) or a station (station, STA).

The AP is an apparatus having a wireless communication function, supports communication or sensing by using a WLAN protocol, has a function of communicating with or sensing another device (for example, a non-access point station (non-access point station, non-AP STA) or another access point) in a WLAN network, and certainly may further have a function of communicating with or sensing another device. Alternatively, the access point is equivalent to a bridge that connects a wired network and a wireless network. A main function of the access point is to connect various wireless network clients together and then connect the wireless network to the Ethernet. In a WLAN system, the access point may be referred to as an access point station (AP STA). The apparatus having the wireless communication function may be an entire device, or may be a chip, a processing system, a functional module, or the like mounted in an entire device. The device in which the chip, the processing system, or the functional module is mounted may implement a method, a function, and the like in embodiments of this application under control of the chip, the processing system, or the functional module. The AP in embodiments of this application is an apparatus that provides a service for the non-AP STA, and may support 802.11 series protocols, subsequent protocols, or the like. For example, the access point may be an access point for a terminal (for example, a mobile phone) to access a wired (or wireless) network, and is mainly deployed in a home, a building, and a park. A typical coverage radius is tens to hundreds of meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in the foregoing devices in various forms, to implement a method and a function in embodiments of this application.

The STA is an apparatus having a wireless communication function, supports communication or sensing by using a WLAN protocol, and has a capability of communicating with or sensing another non-AP STA or access point in a WLAN. In a WLAN system, the station may be referred to as a non-access point station (non-access point station, non-AP STA). For example, the STA is any user communication device that allows a user to communicate with or sense the AP and then communicate with the WLAN. The apparatus having the wireless communication function may be an entire device, or may be a chip, a processing system, a functional module, or the like mounted in an entire device. The device in which the chip, the processing system, or the functional module is mounted may implement a method and a function in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Certainly, the STA may alternatively be a chip, a processing system, or a module in the foregoing devices in various forms, to implement a method and a function in embodiments of this application.

For example, a communication system to which the method provided in embodiments of this application may be applied may include an access point and a station. For example, embodiments of this application may be applied to a scenario of communication or sensing between an AP and an STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between an AP and an STA, between APs, or between STAs. The communication protocol may include IEEE 802.11 series protocols. For example, the 802.11bn protocol may be applicable. Certainly, protocols subsequent to 802.11bn may also be applicable.

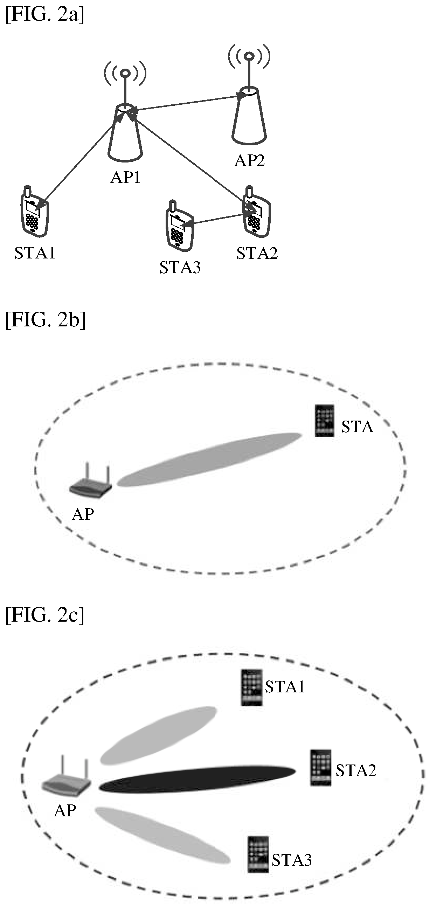

FIG. 2a is a diagram of an architecture of a communication system according to an embodiment of this application. The communication system may include one or more APs and one or more STAs. FIG. 2a shows two access points: an AP1 and an AP2, and three stations: an STA1, an STA2, and an STA3. In an example, the method provided in embodiments of this application may be applicable to data communication, sensing, or the like between one AP and one or more STAs, for example, communication between the AP1 and the STA1 shown in FIG. 2a, communication between an AP and an STA shown in FIG. 2b, communication between the AP1 and the STA1 and the STA2 shown in FIG. 2a, and communication between an AP and an STA1, an STA2, and an STA3 shown in FIG. 2c. In another example, the method provided in embodiments of this application may be applicable to communication between APs, for example, communication between the AP1 and the AP2 shown in FIG. 2a. In still another example, the method provided in embodiments of this application may be applicable to communication between STAs, for example, communication between the STA2 and the STA3 shown in FIG. 2a.

In FIG. 2a to FIG. 2c, an example in which the STA is a mobile phone and the AP is a router is used. This does not mean that types of the AP and the STA in embodiments of this application are limited. In addition, the quantity of APs and the quantity of STAs shown in FIG. 2a to FIG. 2c are merely examples. In specific implementation, there may be more or fewer APs or STAs. This is not limited in embodiments of this application.

From different perspectives of signal sending and signal receiving, in the following content, a first communication apparatus may be understood as a communication apparatus that sends a signal, and a second communication apparatus may be understood as a communication apparatus that receives a signal. Alternatively, the first communication apparatus may also be referred to as a transmit end, and the second communication apparatus may also be referred to as a receive end. In embodiments of this application, the signal may be a signal obtained through processing an encoded sequence. From a perspective of different devices, in an example, the first communication apparatus and the second communication apparatus may be Wi-Fi chips, functional modules, processing systems, or the like disposed in different Wi-Fi devices. In another example, the first communication apparatus may be an AP, and the second communication apparatus may be a non-AP STA. In still another example, both the first communication apparatus and the second communication apparatus may be non-AP STAs or APs. In still another example, the first communication apparatus may be a non-AP STA, and the second communication apparatus may be an AP. In still another example, at least one of the first communication apparatus and the second communication apparatus may be a multi-link device (multi-link device, MLD), or the like. Examples are not enumerated in embodiments of this application. For example, the multi-link device (multi-link device, MLD) means that the device simultaneously has a plurality of stations (for example, APs or non-AP STAs), which operate on different frequency bands or channels. The multi-link device includes a plurality of affiliated stations. The affiliated stations may be physical stations, or may be logical stations. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, a module, or the like mounted in an entire device. The device in which the chip, the processing system, or the module is mounted may implement a method and a function in embodiments of this application under control of the chip, the processing system, or the module. The multi-link device may implement wireless communication in compliance with 802.11 series protocols, to communicate with another device. The another device may be a multi-link device, or may not be a multi-link device. Frequency bands on which the multi-link device operates may include but are not limited to sub 1 GHz, 2.4 GHz, 5 GHz, 6 GHz, and the like. Examples are not enumerated herein.

In embodiments of this application, the method provided in embodiments of this application is described from two sides: the first communication apparatus and the second communication apparatus. However, in a process in which the first communication apparatus and the second communication apparatus transmit a signal, the signal may be further forwarded via another apparatus, for example, a signal between the first communication apparatus and the second communication apparatus is forwarded via a forwarding apparatus. An apparatus other than the first communication apparatus and the second communication apparatus is not limited in embodiments of this application.

The following describes the communication method provided in embodiments of this application with reference to the accompanying drawings.

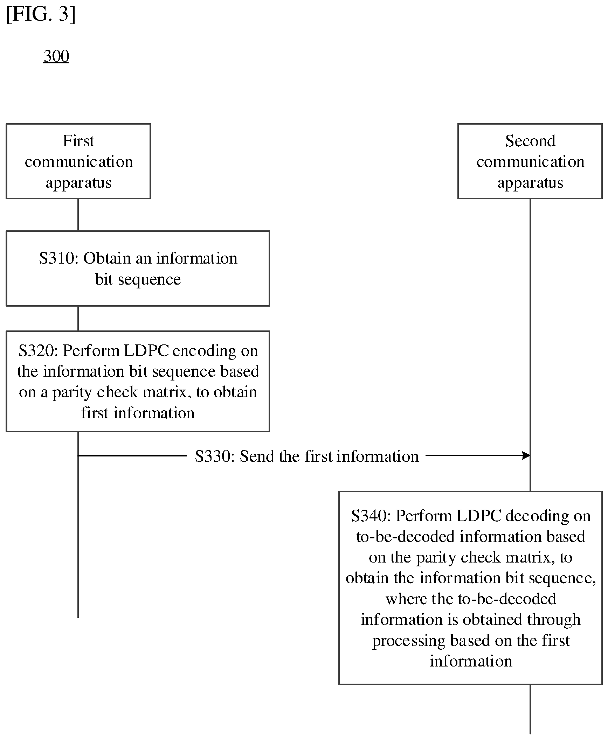

FIG. 3 is a schematic interaction flowchart of a communication method according to an embodiment of this application. With reference to FIG. 3, the method 300 includes at least some of the following steps S310 to S340.

S310: A first communication apparatus obtains an information bit sequence.

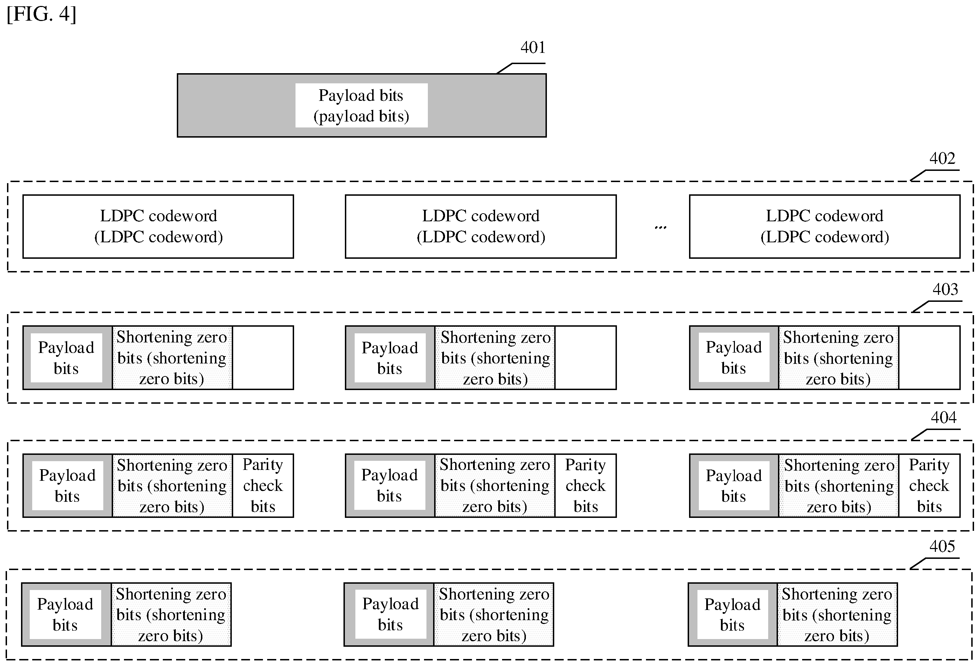

The information bit sequence may be a bit sequence that includes information content. For example, a length of the information bit sequence is N₂, or a quantity of bits of the information bit sequence is N₂, where N₂ is a positive integer. The N₂ bits may include K information bits, which are alternatively referred to as K data bits or K payload bits (payload bits), where K is a positive integer. N₂ may be an integer greater than or equal to K. For example, when N₂ is greater than K, the information bit sequence may further include (N₂-K) 0s. For related descriptions of "0" shown herein, refer to the following descriptions of a shortening operation in FIG. 4. Details are not described herein again.

The value of N₂ may be related to a code length and a coding rate. In the following step 302, if a length of an encoded sequence is N₁, N₂=N₁*R, where R is an encoding coding rate of the information bit sequence. N₁ shown herein may also be referred to as a code length corresponding to a parity check matrix.

In a possible implementation, the method shown in FIG. 3 may further include the following step.

The first communication apparatus obtains the code length N₁. Optionally, the code length N₁ may be 320, 640, 1280, 1920, 2560 bits, or the like.

In a possible implementation, the method shown in FIG. 3 may further include the following step.

The first communication apparatus obtains a coding rate R.

In a WLAN system, different code lengths and coding rates may correspond to different parity check matrices. Therefore, before performing LDPC encoding, the first communication apparatus may further obtain the coding rate R. After obtaining the coding rate R, the first communication apparatus may select a parity check matrix based on the coding rate R and the code length N₁. The coding rate R may be determined based on an MCS selected according to link adaptation. For example, the coding rate R may be determined based on current channel information. A specific method for determining the coding rate R is not limited in this embodiment of this application. In an example, the MCS may be delivered by an AP. In another example, the MCS may be determined by the first communication apparatus, or the like. For example, the first communication apparatus sends the MCS to a second communication apparatus, and the second communication apparatus receives the MCS, and learns of the coding rate R based on the MCS. For another example, the second communication apparatus sends the MCS to the first communication apparatus, and the first communication apparatus receives the MCS, and learns of the coding rate R based on the MCS. A specific interaction procedure of the MCS is not limited in this embodiment of this application.

For example, the coding rate R may be preset, for example, agreed on in a protocol or stored in the first communication apparatus; or the coding rate R may be preconfigured, for example, delivered by an AP; or the coding rate R may be a basic coding rate. For example, in a UWB system, the basic coding rate is 1/2, and another coding rate may be obtained through shortening or puncturing.

For example, R may be any one of the following: 1/2, 2/3, 3/4, and 5/6. Certainly, with evolution of standards, R may have another value in the future. This is not limited in this embodiment of this application.

S320: The first communication apparatus performs LDPC encoding on the information bit sequence based on the parity check matrix, to obtain first information.

The check matrix is determined based on a 16*32 base matrix. The base matrix includes a plurality of first elements, and the first element corresponds to a z*z cyclic shift matrix, that is, the base matrix includes elements having an element value of zero or a non-zero element value. The base matrix further includes a plurality of second elements, and the second element does not correspond to a cyclic shift matrix. In other words, the second element represents a z*z all-zero matrix, and z is a positive integer. Expression of the second element is not limited in this application. For example, the second element may be expressed by using "-", "0", or another symbol or value. Because the second element represents a z*z all-zero matrix, second elements at different positions in the base matrix may have a same expression, for example, each second element in the base matrix may be represented as "-".

As described above, even for a same coding rate, parity check matrices of different code lengths correspond to different base matrices, including different positions and values of first elements between the base matrices. However, in this embodiment of this application, when base matrices are used to determine parity check matrices corresponding to different code lengths, the positions of the first elements remain unchanged in the base matrices. For example, a first base matrix is used to determine a parity check matrix of a first code length, a second base matrix is used to determine a parity check matrix of a second code length, and a position of the first element in the first base matrix is the same as a position of the first element in the second base matrix. For example, for the position of the first element in the first base matrix and the position of the first element in the second base matrix, refer to the following Example 1. For another example, for the position of the first element in the first base matrix and the position of the first element in the second base matrix, refer to the following Example 2. Dimensions z of cyclic shift matrices corresponding to first elements at a same position in the first base matrix and the second base matrix are different. In other words, the first base matrix is lifted based on a z₁*z₁ cyclic shift matrix to obtain the parity check matrix of the first code length, the second base matrix is lifted based on a z₂*z₂ cyclic shift matrix to obtain the parity check matrix of the second code length, where z₁ and z₂ are unequal positive integers. Optionally, values of first elements at a same position in the first base matrix and the second base matrix may be different or may be the same. For example, the first code length may be 320 bits below, and the second code length may be 640 bits below.

For example, to improve encoding flexibility, in this embodiment of this application, the 1^{st} element in the 17^{th} column of the base matrix is zero, the x^{th} element and the 16^{th} element in the 17^{th} column of the base matrix are same non-zero elements, and x is an integer greater than 1 and less than 16.

The following describes the position of the first element and the position of the second element in the base matrix by using two examples. a indicates presence of a z*z cyclic shift identity matrix at a corresponding element position, that is, a indicates the position of the first element in the base matrix, where a should not be understood as a value of the element, and values of first elements represented by a may be the same or may be different. "-" indicates an all-zero matrix, that is, "-" indicates the second element, and "-" may be replaced with "-1" or represented in another form.

### Example 1:

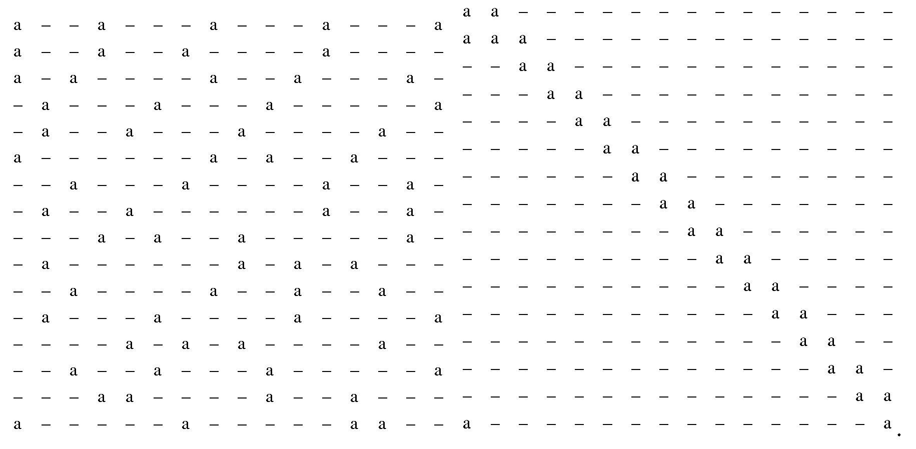

### Example 2:

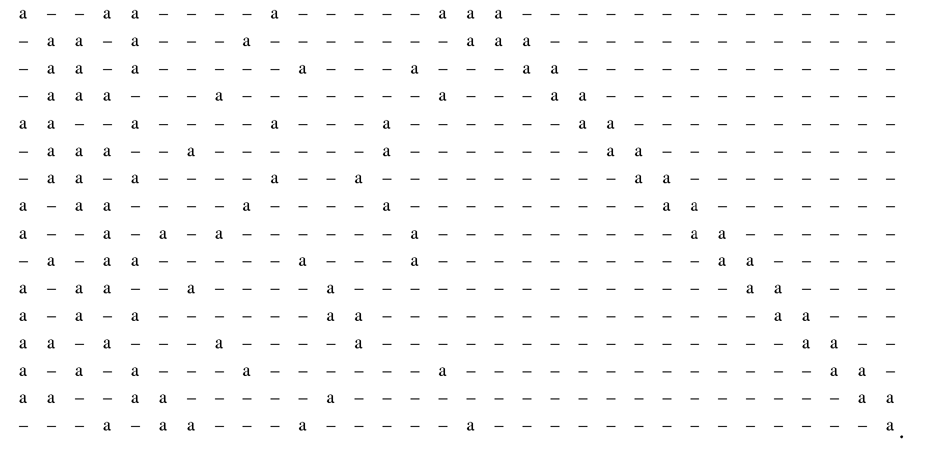

R corresponding to the base matrix of the parity check matrix shown in Example 1 and Example 2 may be equal to 1/2, and R corresponding to the parity check matrix is also equal to 1/2.

The first X columns of the base matrix correspond to information bits, and therefore may be referred to as a square matrix corresponding to the information bits, or may be referred to as an information square matrix, where X=32*R. When R is equal to 1/2, the X columns are the 16*16 part on the left of the base matrix. The last Y columns of the base matrix correspond to parity check bits, and therefore may be referred to as a square matrix corresponding to the parity check bits, or may be referred to as a check square matrix, where Y=32*(1-R). When R is equal to 1/2, the Y columns are the 16*16 part on the right of the base matrix.

In the foregoing Example 1 and Example 2, at least one row has a different row weight, and at least one column has a different column weight in the base matrix. The row weight is a quantity of elements that are in a row and that correspond to a non-all-zero matrix in the base matrix, and the column weight is a quantity of elements that are in a column and that correspond to a non-weight zero matrix in the base matrix. When the base matrix has varying row weights and/or varying column weights, decoding complexity varies, where the decoding complexity may be related to an average variable node degree η. Therefore, the decoding complexity may be represented by η. η in Example 1 is smaller than that in Example 2. Optionally, Example 1 corresponds to η=3.1, and Example 2 corresponds to η=3.47.

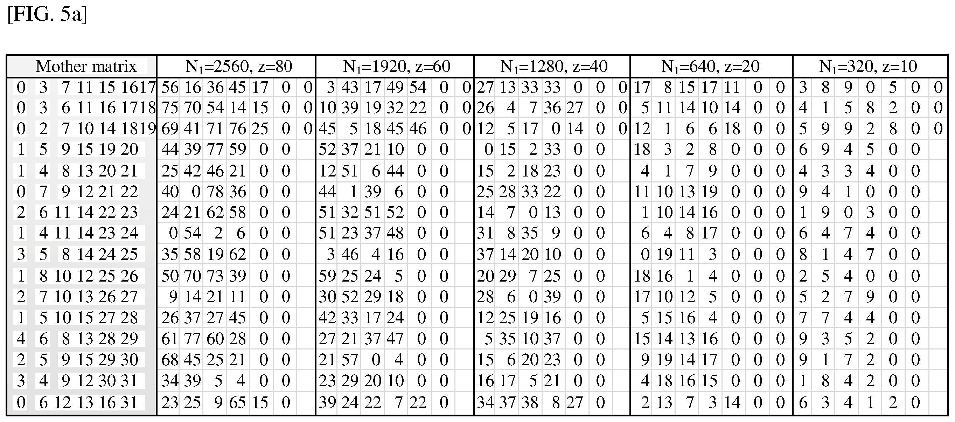

For the position of the first element in the base matrix in the foregoing Example 1, refer to the 1^{st} column in FIG. 5a: mother matrix (mother matrix). "0, 3, 7, 11, 15, 16, 17" indicates that elements in the 0^{th}, 3^{rd}, 7^{th}, 11^{th}, 15^{th}, 16^{th}, and 17^{th} columns of the 0^{th} row of the mother matrix are first elements, "0, 3, 6, 11, 16, 17, 18" indicates that elements in the 0^{th}, 3^{ra}, 6^{th}, 11^{th}, 16^{th}, 17^{th}, and 18^{th} columns of the 1^{st} row of the mother matrix are first elements, and the like.

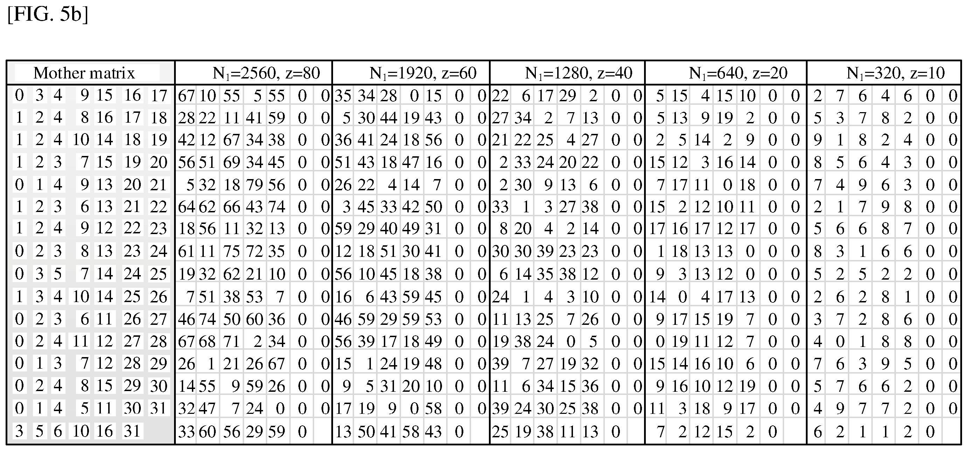

For the position of the first element in the base matrix in the foregoing Example 2, refer to the 1^{st} column in FIG. 5b: mother matrix (mother matrix). "0, 3, 4, 9, 15, 16, 17" indicates that elements in the 0^{th}, 3^{rd}, 4^{th}, 9^{th}, 15^{th}, 16^{th}, and 17^{th} columns of the 0^{th} row of the mother matrix are first elements, "1, 2, 4, 8, 16, 17, 18" indicates that elements in the 1^{st}, 2^{nd}, 4^{th}, 8^{th}, 16^{th}, 17^{th}, and 18^{th} columns of the 1^{st} row of the mother matrix are first elements, and the like.

In the foregoing Example 1, to obtain parity check matrices corresponding to different code lengths through lifting, the value of the lifting factor z varies, and the cyclic shift value (that is, the value of the first element) in the base matrix also varies. The following separately describes the base matrix by using an example with lifting factors z=10, z=20, z=40, z=60 and z=80.

In Implementation 1 of the foregoing Example 1, when the lifting factor z is 10, the base matrix may be lifted, based on the lifting factor, to a parity check matrix corresponding to N₁ being 320 bits. For example, the base matrix may be represented as:

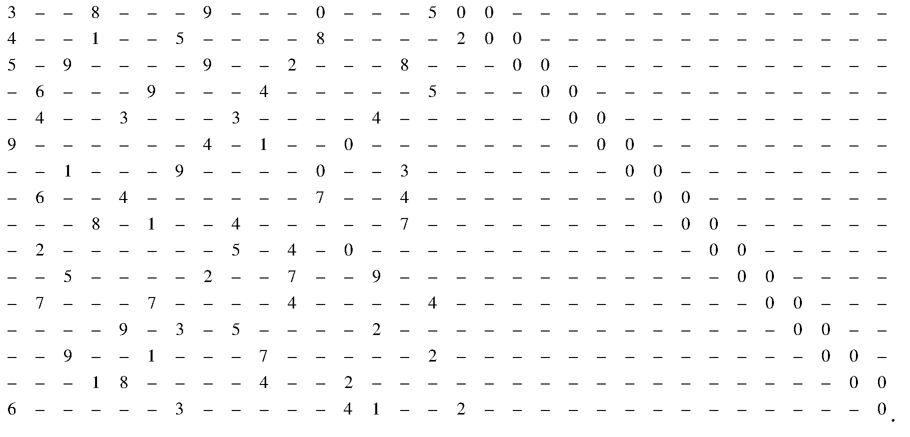

In Implementation 1 of the foregoing Example 1, for the base matrix, reference may also be made to the representation in the 6^{th} column (N₁=320, z=10) in FIG. 5a. "3, 8, 9, 0, 5, 0, 0" indicates that values of first elements in the 0^{th} row of the mother matrix are sequentially 3, 8, 9, 0, 5, 0, and 0; "4, 1, 5, 8, 2, 0, 0" indicates that values of first elements in the 1^{st} row of the mother matrix are sequentially 4, 1, 5, 8, 2, 0, and 0; and the like.

Any first element in the foregoing Implementation 1, for example, an element i (i is a value corresponding to the element), may be lifted to a CPM, where the CPM is obtained through lifting by cyclically shifting an identity matrix to the right by i positions. For example, an element 0 in Implementation 1 may be lifted to a 10*10 identity matrix, and an element i greater than 0 (for example, i is greater than 0) may be cyclically shifted to the right by i positions based on the identity matrix to obtain a 10*10 CPM. The base matrix shown in Implementation 1 includes 16 rows and 32 columns. Therefore, the parity check matrix obtained through lifting based on the lifting factor z may include 16*10 rows and 32*10 columns. The related descriptions of the lifting factor z herein are also applicable to another implementation of Example 1 below. A difference lies only in the value of z. For brevity, details are not described again.

In Implementation 2 of the foregoing Example 1, when the lifting factor z is 20, the base matrix may be lifted, based on the lifting factor, to a parity check matrix corresponding to N₁ being 640 bits. For example, the base matrix may be represented as:

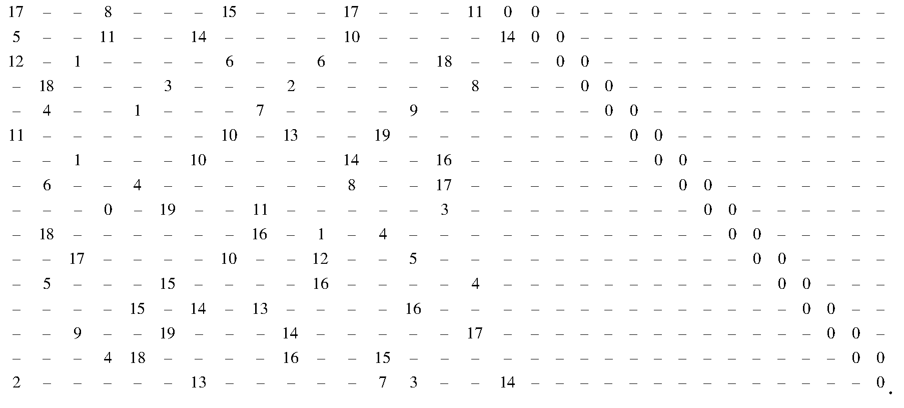

In Implementation 2 of the foregoing Example 1, for the base matrix, reference may also be made to the representation in the 5^{th} column (N₁=640, z=20) in FIG. 5a. "17, 8, 15, 17, 11, 0, 0" indicates that values of first elements in the 0^{th} row of the mother matrix are sequentially 17, 8, 15, 17, 11, 0, and 0; "5, 11, 14, 10, 14, 0, 0" indicates that values of first elements in the 1^{st} row of the mother matrix are sequentially 5, 11, 14, 10, 14, 0, and 0; and the like.

In Implementation 3 of the foregoing Example 1, when the lifting factor z is 40, the base matrix may be lifted, based on the lifting factor, to a parity check matrix corresponding to N₁ being 1280 bits. For example, the base matrix may be represented as:

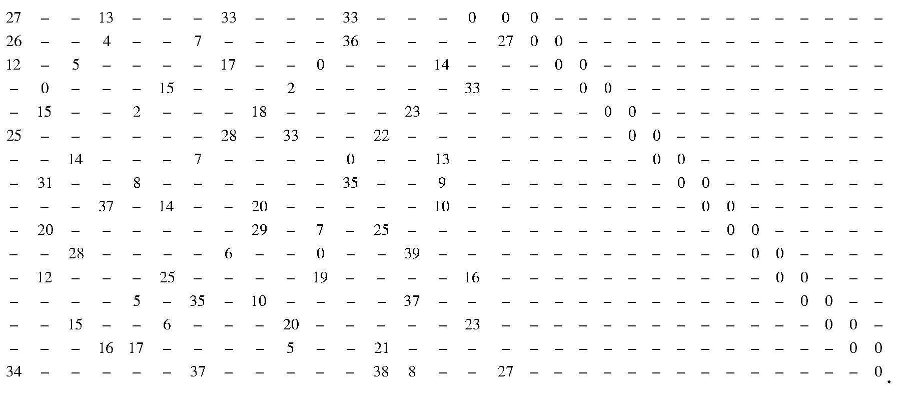

In Implementation 3 of the foregoing Example 1, for the base matrix, reference may also be made to the representation in the 4^{th} column (N₁=1280, z=40) in FIG. 5a. "27, 13, 33, 33, 0, 0, 0" indicates that values of first elements in the 0^{th} row of the mother matrix are sequentially 27, 13, 33, 33, 0, 0, and 0; "26, 4, 7, 36, 27, 0, 0" indicates that values of first elements in the 1^{st} row of the mother matrix are sequentially 26, 4, 7, 36, 27, 0, and 0; and the like.

In Implementation 4 of the foregoing Example 1, when the lifting factor z is 60, the base matrix may be lifted, based on the lifting factor, to a parity check matrix corresponding to N₁ being 1920 bits. For example, the base matrix may be represented as:

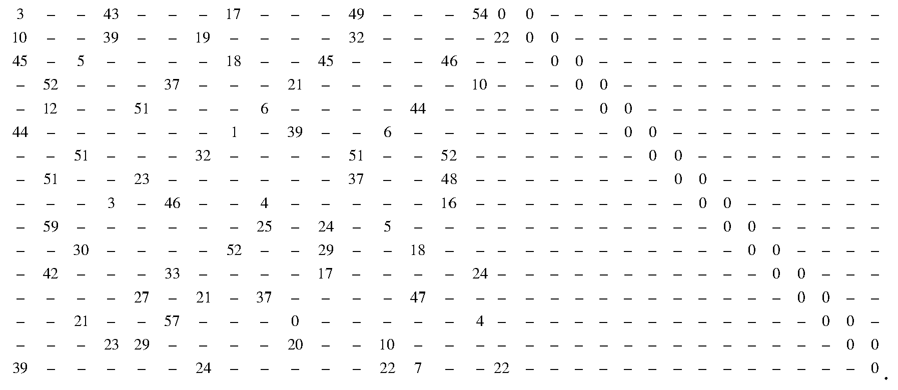

In Implementation 4 of the foregoing Example 1, for the base matrix, reference may also be made to the representation in the 3^{rd} column (N₁=1920, z=60) in FIG. 5a. "3, 43, 17, 49, 54, 0, 0" indicates that values of first elements in the 0^{th} row of the mother matrix are sequentially 3, 43, 17, 49, 54, 0, and 0; "10, 39, 19, 32, 22, 0, 0" indicates that values of first elements in the 1^{st} row of the mother matrix are sequentially 10, 39, 19, 32, 22, 0, and 0; and the like.

In Implementation 5 of the foregoing Example 1, when the lifting factor z is 80, the base matrix may be lifted, based on the lifting factor, to a parity check matrix corresponding to N₁ being 2560 bits. For example, the base matrix may be represented as:

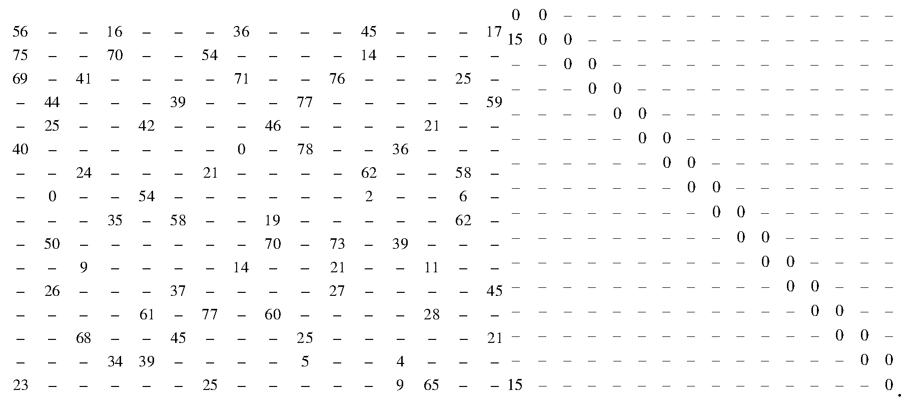

In Implementation 5 of the foregoing Example 1, for the base matrix, reference may also be made to the representation in the 2^{nd} column (N₁=2560, z=80) in FIG. 5a. "56, 16, 36, 45, 17, 0, 0" indicates that values of first elements in the 0^{th} row of the mother matrix are sequentially 56, 16, 36, 45, 17, 0, and 0; "75, 70, 54, 14, 15, 0, 0" indicates that values of first elements in the 1^{st} row of the mother matrix are sequentially 75, 70, 54, 14, 15, 0, and 0; and the like.

Similar to the foregoing Example 1, in Example 2, if the value of the lifting factor z varies, the cyclic shift value (that is, the value of the first element) in the base matrix also varies. The following separately describes the base matrix by using an example with lifting factors z=10, z=20, z=40, z=60 and z=80.

In Implementation 1 of the foregoing Example 2, when the lifting factor z is 10, the base matrix may be lifted, based on the lifting factor, to a parity check matrix corresponding to N₁ being 320 bits. For example, the base matrix may be represented as:

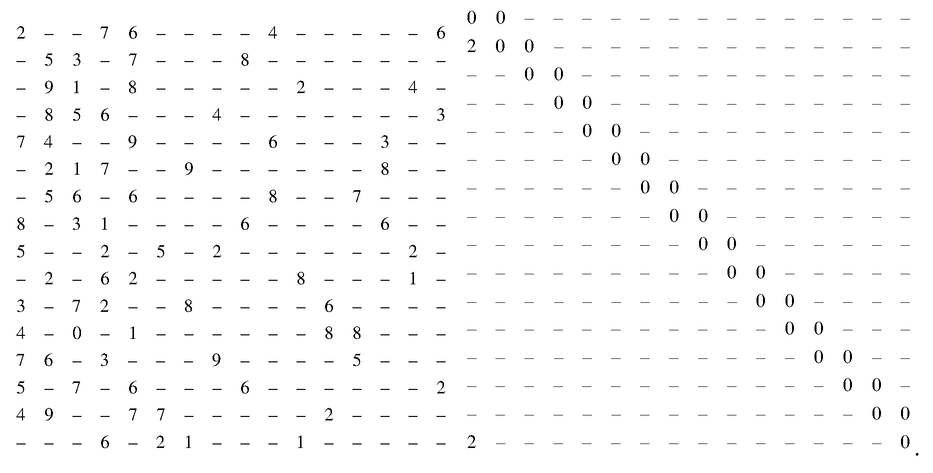

In Implementation 1 of the foregoing Example 2, for the base matrix, reference may also be made to the representation in the 6^{th} column (N₁=320, z=10) in FIG. 5b. "2, 7, 6, 4, 6, 0, 0" indicates that values of first elements in the 0^{th} row of the mother matrix are sequentially 2, 7, 6, 4, 6, 0, and 0; "5, 3, 7, 8, 2, 0, 0" indicates that values of first elements in the 1^{st} row of the mother matrix are sequentially 5, 3, 7, 8, 2, 0, and 0; and the like.

In Implementation 2 of the foregoing Example 2, when the lifting factor z is 20, the base matrix may be lifted, based on the lifting factor, to a parity check matrix corresponding to N₁ being 640 bits. For example, the base matrix may be represented as:

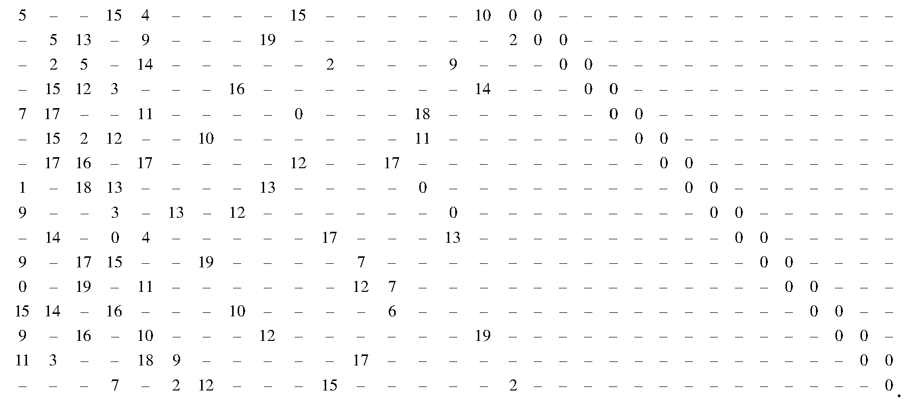

In Implementation 2 of the foregoing Example 2, for the base matrix, reference may also be made to the representation in the 5^{th} column (N₁=640, z=20) in FIG. 5b. "5, 15, 4, 15, 10, 0, 0" indicates that values of first elements in the 0^{th} row of the mother matrix are sequentially 5, 15, 4, 15, 10, 0, and 0; "5, 13, 9, 19, 2, 0, 0" indicates that values of first elements in the 1^{st} row of the mother matrix are sequentially 5, 13, 9, 19, 2, 0, and 0; and the like.

In Implementation 3 of the foregoing Example 2, when the lifting factor z is 40, the base matrix may be lifted, based on the lifting factor, to a parity check matrix corresponding to N₁ being 1280 bits. For example, the base matrix may be represented as:

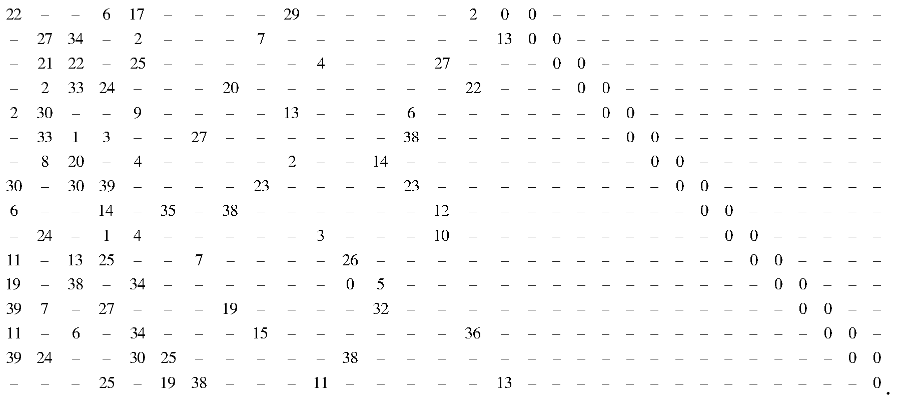

In Implementation 3 of the foregoing Example 2, for the base matrix, reference may also be made to the representation in the 4^{th} column (N₁=1280, z=40) in FIG. 5b. "22, 6, 17, 29, 2, 0, 0" indicates that values of first elements in the 0^{th} row of the mother matrix are sequentially 22, 6, 17, 29, 2, 0, and 0; "27, 34, 2, 7, 13, 0, 0" indicates that values of first elements in the 1^{st} row of the mother matrix are sequentially 27, 34, 2, 7, 13, 0, and 0; and the like.

In Implementation 4 of the foregoing Example 2, when the lifting factor z is 60, the base matrix may be lifted, based on the lifting factor, to a parity check matrix corresponding to N₁ being 1920 bits. For example, the base matrix may be represented as:

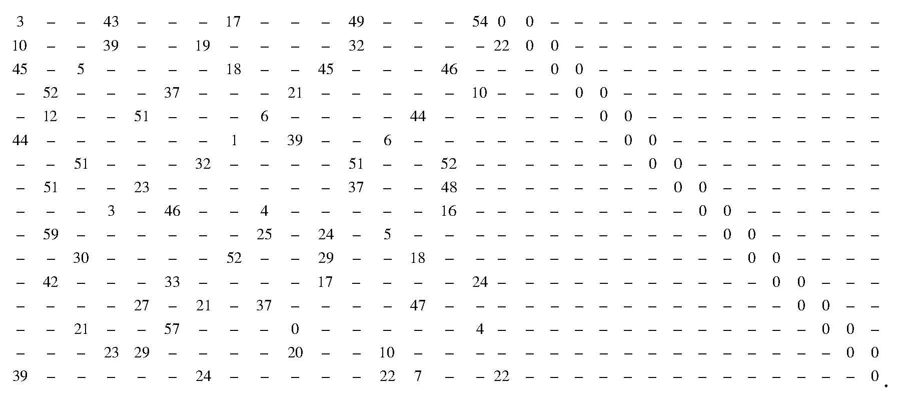

In Implementation 4 of the foregoing Example 2, for the base matrix, reference may also be made to the representation in the 3^{rd} column (N₁=1920, z=60) in FIG. 5b. "35, 34, 28, 0, 15, 0, 0" indicates that values of first elements in the 0^{th} row of the mother matrix are sequentially 35, 34, 28, 0, 15, 0, and 0; "5, 30, 44, 19, 43, 0, 0" indicates that values of first elements in the 1^{st} row of the mother matrix are sequentially 5, 30, 44, 19, 43, 0, and 0; and the like.

In Implementation 5 of the foregoing Example 2, when the lifting factor z is 80, the base matrix may be lifted, based on the lifting factor, to a parity check matrix corresponding to N₁ being 2560 bits. For example, the base matrix may be represented as:

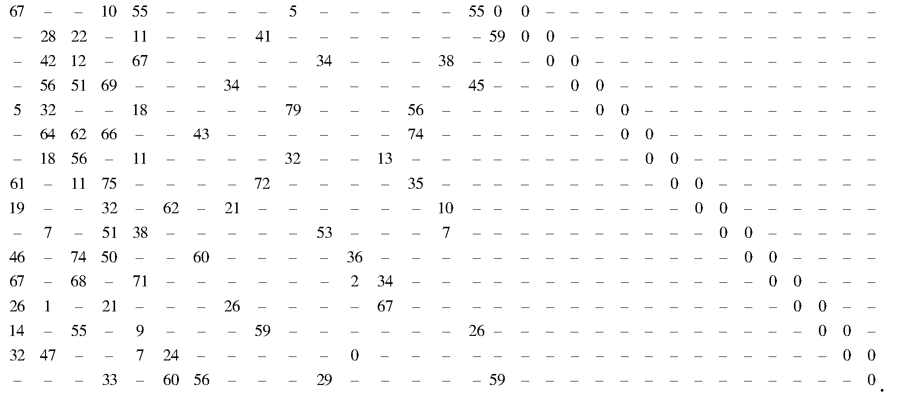

In Implementation 5 of the foregoing Example 2, for the base matrix, reference may also be made to the representation in the 2^{nd} column (N₁=2560, z=80) in FIG. 5b. "67, 10, 55, 5, 55, 0, 0" indicates that values of first elements in the 0^{th} row of the mother matrix are sequentially 67, 10, 55, 5, 55, 0, and 0; "28, 22, 11, 41, 59, 0, 0" indicates that values of first elements in the 1^{st} row of the mother matrix are sequentially 28, 22, 11, 41, 59, 0, and 0; and the like.

In the possible implementations of the foregoing Example 2, for related descriptions of the lifting factor z, reference may be made to the descriptions in Example 1. Details are not described herein again.

The base matrices of the parity check matrices shown in the possible implementations of the foregoing Example 1 and Example 2 are merely examples, and do not constitute any limitation on this application. In addition, the value of z in any one of the foregoing implementations is merely an example, and the value of z may alternatively be greater than the value in the foregoing example. For example, in Implementation 5 of the foregoing Example 2, z may alternatively be greater than 80, and N₁ corresponding to a base matrix of a corresponding parity check matrix is equal to 32*z.

In S320, the first communication apparatus may perform LDPC encoding by using an encoding module (for example, an LDPC encoding module), to obtain an encoded sequence, and the encoding module outputs the encoded sequence. A length of the encoded sequence may be the foregoing N₁. The encoded sequence may include K information bits and E parity check bits. Alternatively, the encoded sequence may include an information bit sequence and a parity check bit sequence. A length of the information bit sequence may be N₂, and a length of the parity check bit sequence may be E. N₁=N₂+E. A value of E is related to N₁ and R. For example, if N₁=320 and R=1/2, E=160.

In a possible implementation, after outputting the encoded sequence, the first communication apparatus may further perform a shortening operation. The following uses examples for description.

Generally, after being encoded, an information bit sequence needs to be placed onto an integer quantity of orthogonal frequency division multiplexing (orthogonal frequency division multiplexing, OFDM) symbols, and an encoded sequence also needs to be placed into an integer quantity of LDPC codewords. Therefore, before the first communication apparatus performs LDPC encoding, the first communication apparatus further needs to first determine a minimum quantity N_{SYM} of OFDM symbols required for current transmission, and then calculate, based on the N_{SYM} and a current modulation and coding scheme (for example, a modulation order indicated by the MCS), a total quantity N_{TCB}=N_{CBPS}*N_{SYM} of encoded bits that can be stored on all OFDM symbols, where N_{CBPS} is a quantity of encoded bits that can be stored on each OFDM symbol. Then, the first communication apparatus may calculate, based on the foregoing obtained result, an LDPC code length (that is, the code length shown in this embodiment of this application) to be used for current transmission and a quantity N_{CW} of required codewords. For example, when there are not enough information bits (for example, in the following cases in which K is less than 1944 shown in Example 1 to Example 3) to fill an information bit part of an LDPC codeword, the first communication apparatus may perform a shortening operation before performing LDPC encoding (which may also be referred to as generating a parity check bit). The shortening operation means that before a parity check bit is generated through LDPC encoding, a specific quantity of 0s are filled in an information bit part, and these 0s are deleted after the parity check bit is generated through encoding. FIG. 4 is a partial diagram of a shortening operation in LDPC encoding according to an embodiment of this application. As shown in FIG. 4, step 401 indicates that the first communication apparatus may obtain to-be-encoded payload bits (payload bits) (for example, the K information bits shown in this embodiment of this application). Step 402 indicates that the first communication apparatus may calculate an LDPC code length and a quantity of codewords. FIG. 4 shows an example of three LDPC codewords. A length (that is, a code length) of each LDPC codeword (LDPC codeword) may be equal to the code length. Step 403 indicates that the first communication apparatus may perform a shortening operation on the information bits. FIG. 4 shows a codeword including payload bits and shortening zero bits (shortening zero bits). Step 404 indicates that the first communication apparatus may generate parity check bits (parity bits) by using the payload bits and the shortening zero bits. FIG. 4 shows codewords including the payload bits, the shortening zero bits, and the parity check bits. Step 405 indicates that the first communication apparatus deletes these shortening zero bits (discard shortening bits). FIG. 4 shows codewords including the data bits and the parity check bits. The foregoing related descriptions of the shortening operation and the like are merely examples. For related descriptions of the shortening operation and the like, reference may also be made to a related standard, protocol, or the like. This is not limited in this embodiment of this application.

The first information in S320 may be the encoded sequence, or the first information is a signal that is obtained by performing processing based on the encoded sequence and that can be transmitted through a channel. For example, the first communication apparatus may further perform at least one of the following processing on the encoded sequence: stream parsing, constellation mapping, LDPC subcarrier mapping, stream cyclic shift, spatial and frequency mapping, inverse discrete Fourier transform (inverse discrete fourier transform, IDFT), and cyclic prefix insertion and windowing (insert GI and window).

For example, the first communication apparatus may also perform rate matching on the encoded sequence. A rate matching method includes puncturing, repetition, and shortening. For example, the first communication apparatus may also puncture a parity check bit in the encoded sequence, to obtain a higher coding rate or a shorter code length. For other processing performed by the first communication apparatus on the encoded sequence, reference may also be made to a related standard, protocol, or the like. This is not limited in this embodiment of this application.

S330: The first communication apparatus sends the first information to the second communication apparatus, and correspondingly, the second communication apparatus receives the first information sent by the first communication apparatus.

For example, after receiving the first information, the second communication apparatus may perform corresponding processing on the first information, to obtain to-be-decoded information. For example, when receiving the first information, the second communication apparatus may perform at least one of the following processing: cyclic prefix removal, discrete Fourier transform (discrete fourier transform, DFT), spatial and frequency demapping, de-interleaving, and constellation demapping. For corresponding processing before the second communication apparatus obtains the to-be-decoded information, reference may also be made to a related standard, protocol, or the like. This is not limited in this embodiment of this application. A length of the to-be-decoded information may be N₁.

S340: The second communication apparatus performs LDPC decoding on the to-be-decoded information based on the parity check matrix, to obtain the information bit sequence.

For example, a decoding method that may be used by the second communication apparatus includes but is not limited to a hard-decision decoding method, a soft-decision decoding method, or a hybrid decoding method. A specific decoding process is not described in detail in this embodiment of this application.

For example, the second communication apparatus may alternatively determine the code length N₁ by using a method similar to that in FIG. 4. For related descriptions of how the second communication apparatus learns the code length N₁ and the coding rate R, refer to the foregoing descriptions of the first communication apparatus. Details are not described herein again.

For a method for learning N₁ and R by the first communication apparatus and a method for learning N₁ and R by the second communication apparatus, reference may be made to a related standard, protocol, or the like. This is not limited in this embodiment of this application.

In this embodiment of this application, S310 and S320 may be implemented by an encoding module, and step 340 may be implemented by a decoding module. In specific implementation, the method shown in FIG. 3 may be further divided into an encoding method or a decoding method. For example, the first communication apparatus may include the encoding module, and the second communication apparatus may include the decoding module. Optionally, in addition to the foregoing encoding module, the first communication apparatus may further include an obtaining module, where the obtaining module may be configured to obtain the code length, the coding rate, and the like. Optionally, the first communication apparatus may further include a shortening module, a block segmentation module, or the like. Optionally, in addition to the decoding module, the second communication apparatus may further include an obtaining module, where the obtaining module may be configured to obtain the to-be-decoded information.

In embodiments of this application, the first base matrix supporting the first code length is associated with the second base matrix supporting the second code length, for example, a position of a cyclic shift matrix represented by a first element in the first base matrix is the same as a position of a cyclic shift matrix represented by a first element in the second base matrix. This reduces processing complexity of determining a parity check matrix by a communication device, improving data transmission reliability of a system.

Further, in this embodiment of this application, in the parity check matrix determined based on the 16*32 base matrix, the 1^{st} element in the 17^{th} column is zero, the x^{th} element and the 16^{th} element in the 17^{th} column are same non-zero elements, and x is an integer greater than 1 and less than 16, improving encoding flexibility.

The following describes a method for determining a parity check matrix in embodiments of this application.

The method for determining a parity check matrix shown in embodiments of this application is merely an example. In specific implementation, the following determining method may be defined by a standard. Alternatively, in specific implementation, the two communication parties may store a base matrix of a parity check matrix, store a cyclic shift value, store a position of a first element, or the like.

A first communication apparatus may determine, based on a 16*32 base matrix, a parity check matrix corresponding to a target code length. For the 16*32 base matrix, reference may be made to the descriptions in any implementation in the foregoing Example 1 and Example 2. In some embodiments, the first communication apparatus may select the base matrix based on the target code length. For example, when the code length is 320 bits, the base matrix in Implementation 1 in Example 1 or the base matrix in Implementation 1 in Example 2 is selected. For another example, when the code length is 640 bits, the base matrix in Implementation 1 in Example 1 or the base matrix in Implementation 2 in Example 2 is selected. In some other embodiments, the first communication apparatus may obtain position information of a first element in the base matrix, and determine a value (namely, a cyclic shift value) of each first element in the base matrix based on the target code length. For example, when the target code length is 320 bits, in the foregoing Example 1, the first communication apparatus may obtain the information in the 1^{st} column and the information in the 6^{th} column in FIG. 5a, to determine the base matrix.

Further, the first communication apparatus lifts the base matrix to obtain parity check matrices of LDPC codes with different code lengths. A process of obtaining a parity check matrix by lifting a base matrix is described above. For brevity, details are not described again.

A method for determining a parity check matrix by the second communication apparatus is similar to that of the first communication apparatus. For brevity, details are not described again.

The foregoing method for determining a parity check matrix may be specific to a coding rate, for example, the coding rate 1/2. The first communication apparatus may perform rate matching on the encoded sequence by performing processing operations such as puncturing, repetition, and shortening, to obtain an encoded sequence of another coding rate.

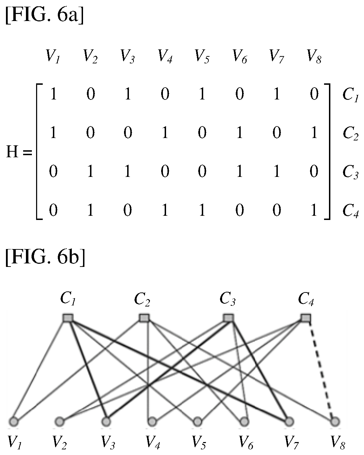

The parity check matrix of the LDPC code may also be represented by using a factor graph (tanner graph). Factor graphs are in one-to-one correspondence with parity check matrices. The factor graph includes two types of nodes. A first type of nodes are variable nodes, indicating information bits. A second type of nodes are check nodes, indicating check constraints. Each check node represents a check constraint. FIG. 6a shows a parity check matrix H of an LDPC code. In FIG. 6a, {Vi} indicates a variable node set, and {Cj} indicates a check node set, where i=1, 2, ..., and 8, and j=1, 2, 3, and 4. Each row of the parity check matrix H corresponds to one check equation, and each column corresponds to one information bit. In FIG. 6a, there are eight variable nodes and four check nodes. If an information bit is included in a corresponding check equation, a related variable node and check node are connected by using a connection line, to obtain a factor graph. FIG. 6b shows the factor graph of the parity check matrix H of the LDPC code. For other descriptions of the factor graph, reference may be made to a related standard, protocol, or the like. This is not limited in this embodiment of this application.

In this embodiment of this application, the parity check matrix is designed based on a quasi-rule check degree. To be specific, weights of all rows (that is, a quantity of non-zero elements in the rows) of the base matrix have only two values: d and d+1. For example, in Example 1, row weights of the 0^{th} row to the 2^{nd} row are 7, and row weights of the 3^{rd} row to the 15^{th} row are 6. For another example, in Example 2, row weights of the 0^{th} row to the 14^{th} row are 7, and a row weight of the 15^{th} row is 6. This feature of the base matrix can improve processing efficiency of a check node in an LDPC decoding procedure, avoid a resource waste, and further minimize a maximum degree (that is, the foregoing d+1) of the check node to reduce a resource waste.

To balance factors such as performance, a decoding convergence speed, and decoding complexity of LDPC codes, the LDPC code (or the parity check matrix) in this application may be effectively applied to a transmission system such as a UWB system that raises high requirements on a delay and a decoding convergence speed. In this embodiment of this application, some or all of the control variables: an average variable node degree (η), a slope (slope), and a stability factor (stability factor) are adjusted to obtain the base matrix. For example, a position of a first element and a value of the first element in the base matrix are determined.

The decoding complexity is associated with the foregoing variable node degree η. In some embodiments, the decoding complexity may be represented by using the variable node degree η. The decoding complexity may also be associated with an average quantity of iterations. For example, iterative decoding complexity may be represented by a product of the average quantity nᵢₜ of iterations and the decoding complexity, for example, C ∝ η · nᵢₜ.

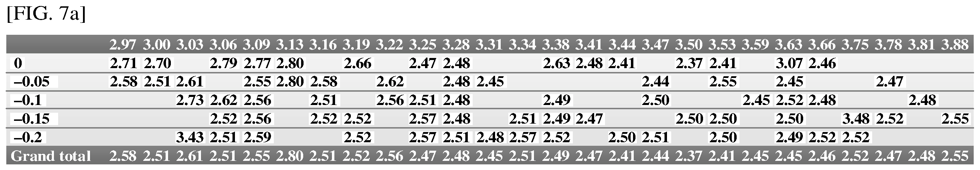

With reference to FIG. 7a to FIG. 7d, the following describes, by using an example, impact of the base matrix on decoding performance when different control variables are used.

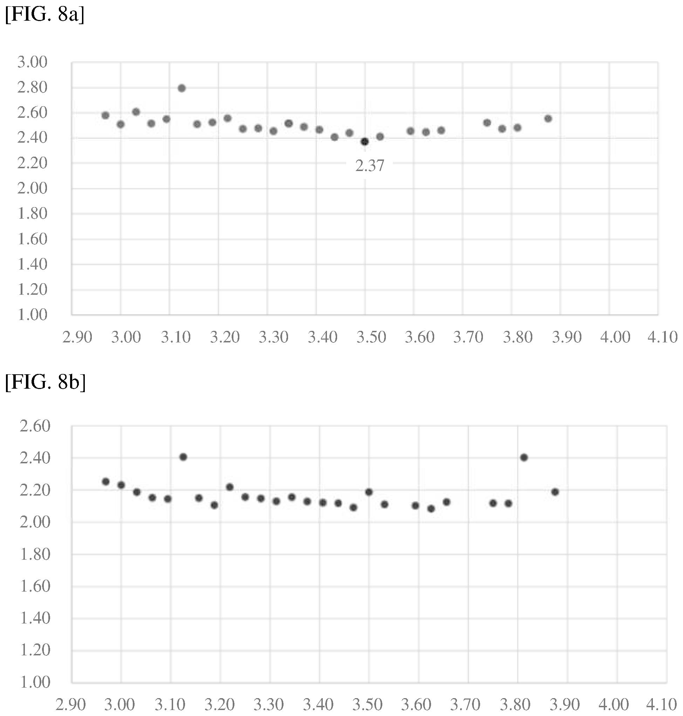

Refer to FIG. 7a. An example with a code length being 320 bits and eight decoding iterations is used. The 1^{st} column in FIG. 7a represents a slope, a column label part of the 1^{st} row describes an average column weight of a parity check matrix, and each entry in the table in FIG. 7a represents an SNR difference (or referred to as an SNR loss value) between a signal-to-noise ratio (signal-noise ratio, SNR) required to reach a 10⁻² frame error rate (frame error rate, FER) under a response slope (row) and average column weight (column) and a response channel capacity SNR. A lower SNR loss value indicates better performance of a response LDPC code. The last row: grand total (grand total) indicates a minimum SNR loss value under different average column weights. In FIG. 8a, the data in the table shown in FIG. 7a is represented by using the decoding complexity as a horizontal coordinate and the SNR loss value as a vertical coordinate.

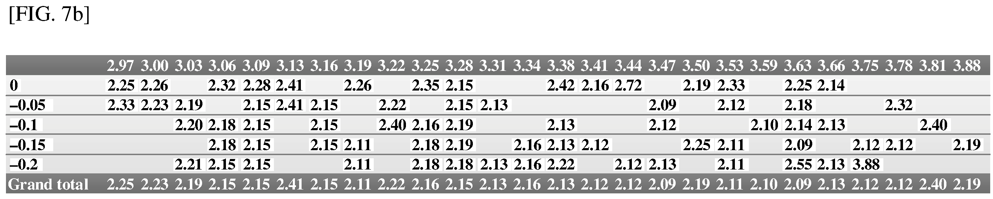

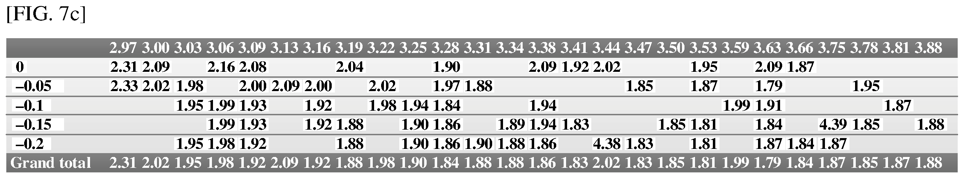

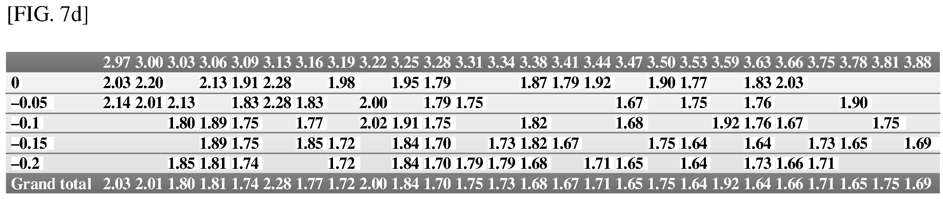

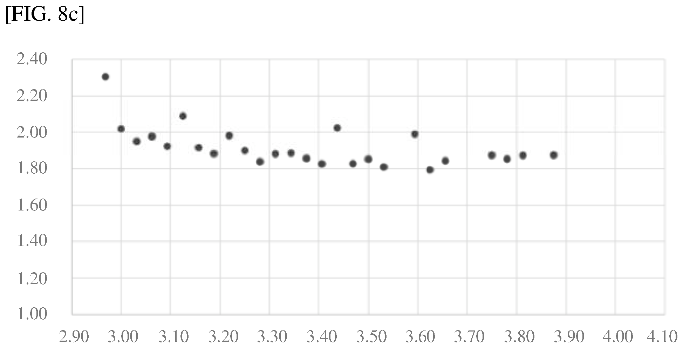

FIG. 7b is similar to FIG. 7a, and a difference lies in that the code length of the parity check matrix in the table shown in FIG. 7b is 640 bits. In FIG. 8b, the data in the table shown in FIG. 7b is represented by using the decoding complexity as a horizontal coordinate and the SNR loss value as a vertical coordinate. FIG. 7c is similar to FIG. 7a, and a difference lies in that the code length of the parity check matrix in the table shown in FIG. 7c is 1280 bits. In FIG. 8c, the data in the table shown in FIG. 7c is represented by using the decoding complexity as a horizontal coordinate and the SNR loss value as a vertical coordinate. FIG. 7d is similar to FIG. 7a, and a difference lies in that the code length of the parity check matrix in the table shown in FIG. 7d is 2560 bits.

Refer to FIG. 7a to FIG. 7d and FIG. 8a to FIG. 8c. In this embodiment of this application, to achieve balance between performance and decoding complexity, parity check matrices implemented with decoding complexity η=3.1 and decoding complexity η=3.47 are selected as parity check matrices in this embodiment of this application.

The following describes a simulation result of the check matrix provided in this embodiment of this application.

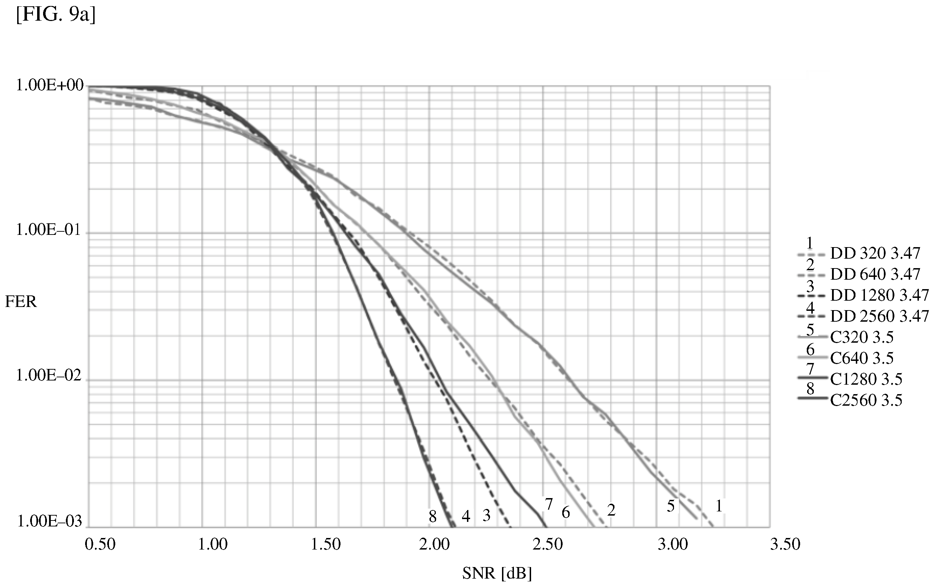

The following separately provides performance comparison between the foregoing parity check matrices of the LDPC code and a reference parity check matrix. The reference parity check matrix may be a parity check matrix of an LDPC code of a classless Wi-Fi encoding structure. In FIG. 9a to FIG. 9d, a horizontal coordinate identifies an SNR in dB, and a vertical coordinate identifies an FER. Sequence numbers 1 to 8 in FIG. 9a to FIG. 9d are set for ease of distinguishing different curves, and should not be construed as a limitation on embodiments of this application.

Under eight decoding iterations, FIG. 9a shows FER performance comparison between a parity check matrix provided in embodiments of this application, for example, a dual diagonal (dual diagonal, DD) parity check matrix with decoding complexity η=3.47, and a parity check matrix of classless Wi-Fi encoding (for example, a non-dual diagonal parity check matrix with eta=3.5) that have a same code length, where eta refers to complexity, and is represented by an average column weight of a code parity check matrix. FIG. 9a shows FER performance comparison between a parity check matrix DD 320, 3.47 and a parity check matrix C320, eta=3.5 that have a code length of 320 bits; FER performance comparison between a parity check matrix DD 640, 3.47 and a parity check matrix C640, eta=3.5 that have a code length of 640 bits; FER performance comparison between a parity check matrix DD 1280, 3.47 and a parity check matrix C1280, eta=3.5 that have a code length of 1280 bits; and FER performance comparison between a parity check matrix DD 2560, 3.47 and a parity check matrix C2560, eta=3.5 that have a code length of 2560 bits, where R=1/2, and C320, C640, C1280, and C2560 are non-dual diagonal parity check matrices.

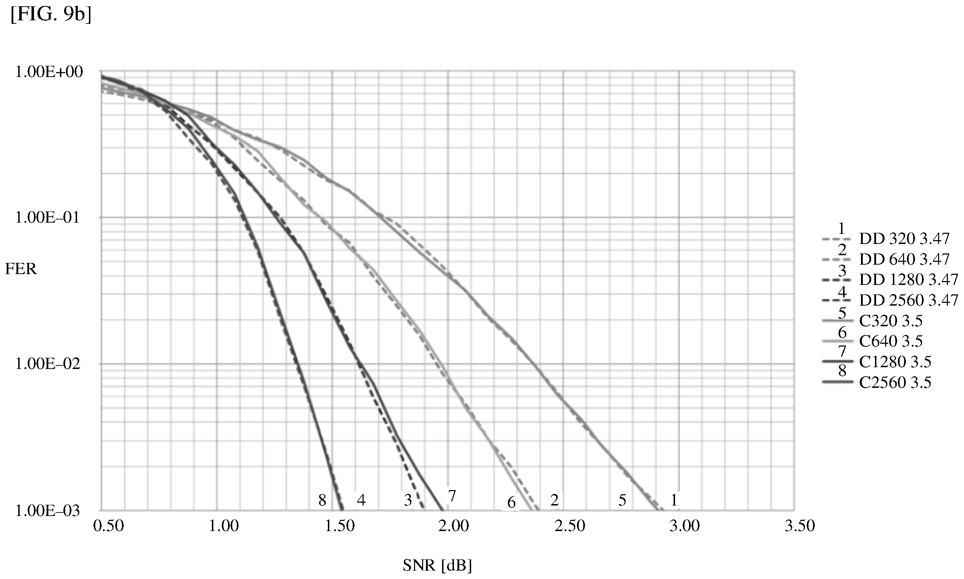

Under 25 decoding iterations, FIG. 9b shows FER performance comparison between a parity check matrix provided in embodiments of this application, for example, a (DD) parity check matrix with decoding complexity η=3.47, and a parity check matrix of classless Wi-Fi encoding (eta=3.5) that have a same code length.

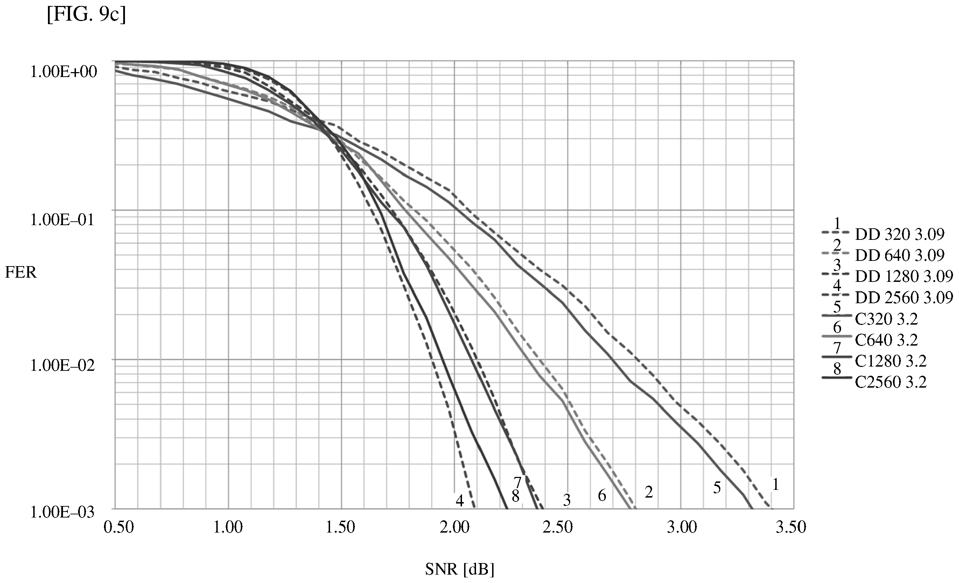

Under eight decoding iterations, FIG. 9c shows FER performance comparison between a parity check matrix provided in embodiments of this application, for example, a (DD) parity check matrix with decoding complexity η=3.09, and a parity check matrix of classless Wi-Fi encoding (eta=3.2) that have a same code length.

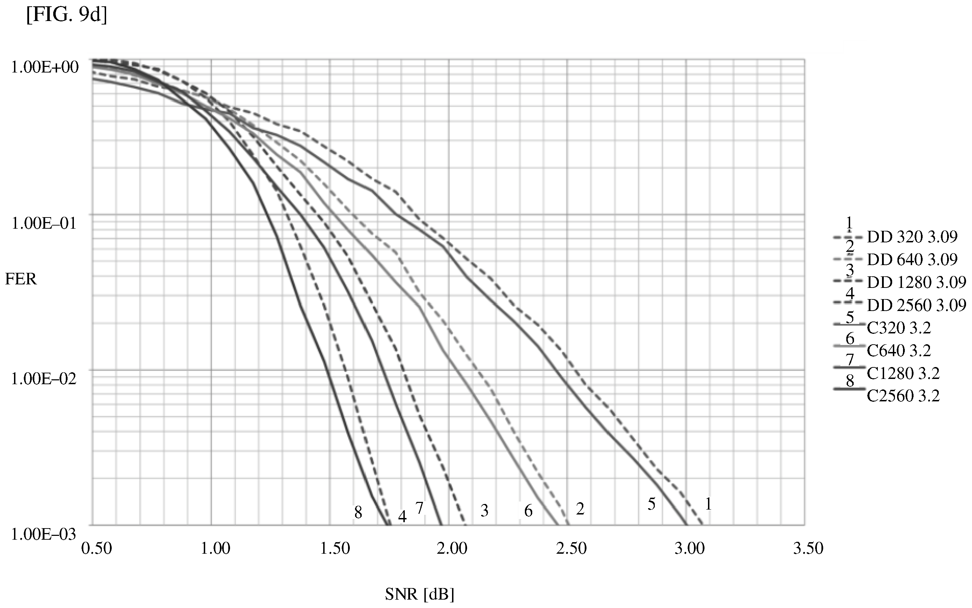

Under 25 decoding iterations, FIG. 9d shows FER performance comparison between a parity check matrix provided in embodiments of this application, for example, a (DD) parity check matrix with decoding complexity η=3.09, and a parity check matrix of classless Wi-Fi encoding (eta=3.2) that have a same code length.

It can be learned from FIG. 9a to FIG. 9d that parity check matrices in embodiments of this application are obtained by lifting base matrices having first elements at same positions. The parity check matrices have excellent decoding performance, and good balance between decoding performance and decoding complexity is achieved.

A communication apparatus provided in embodiments of this application is described below.

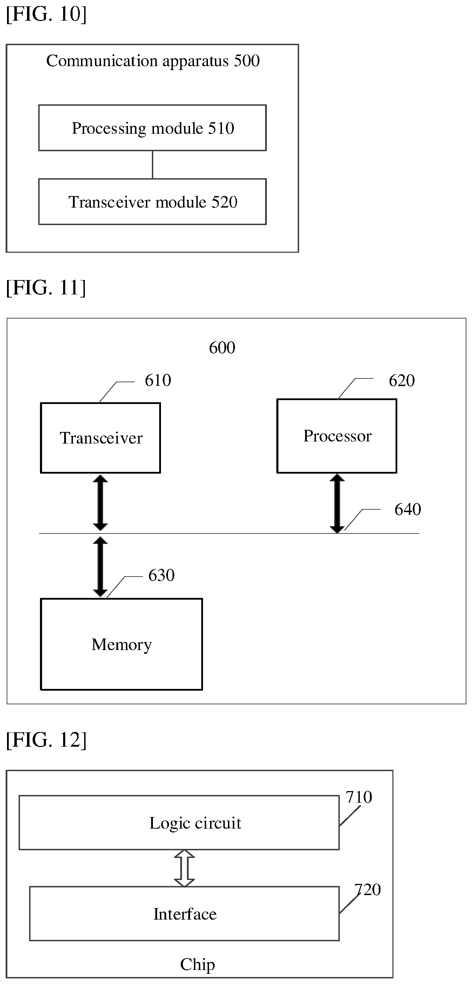

In this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that module division in this application is an example, and is merely a logical function division. In actual implementation, another division manner may be used. The following describes in detail a communication apparatus in embodiments of this application with reference to FIG. 10 to FIG. 10.

FIG. 10 is a diagram of a structure of a communication apparatus 500 according to an embodiment of this application. As shown in FIG. 10, the communication apparatus includes a processing module 510 and a transceiver module 520. The transceiver module 520 may implement a corresponding communication function, and the processing module 510 is configured to implement a corresponding processing function. For example, the transceiver module 520 may also be referred to as an interface, a communication interface, a communication module, or the like.

In some embodiments of this application, the communication apparatus may be configured to perform an action performed by the first communication apparatus in the foregoing method embodiments. In this case, the first communication apparatus may be a Wi-Fi device, or a chip, a functional module, or the like that can be configured in the device. The transceiver module 520 is configured to perform a sending/receiving-related operation of the first communication apparatus in the foregoing method embodiments, and the processing module 510 is configured to perform a processing-related operation of the first communication apparatus in the foregoing method embodiments.

For example, the processing module 510 may be configured to determine, based on a 16*32 base matrix, a parity check matrix corresponding to a target code length, where the base matrix includes a plurality of first elements, the first element corresponds to a cyclic shift matrix, a position of the first element in a first base matrix is the same as a position of the first element in a second base matrix, the first base matrix is used to determine a parity check matrix corresponding to a first code length, the second base matrix is used to determine a parity check matrix corresponding to a second code length, the target code length includes the first code length or the second code length, the 1^{st} element in the 17^{th} column of the base matrix is zero, and the x^{th} element and the 16^{th} element in the 17^{th} column of the base matrix are same non-zero elements. The transceiver module 520 may be configured to send first information, where the first information is obtained through encoding based on the parity check matrix.

For example, the processing module 510 may be further configured to perform LDPC encoding on an information bit sequence, and perform other processing on an encoded sequence, to obtain the first information. The transceiver module 520 may be further configured to send or output a signal obtained through other processing.

For example, the processing module 510 may include an encoding module. For example, the processing module 510 may further include an obtaining module, a shortening module, a block segmentation module, or the like. For example, the processing module 510 may further include at least one of the following modules: a constellation mapping module, a stream cyclic shift module, a spatial and frequency mapping module, an IDFT module, and a cyclic prefix insertion and windowing module. For example, the transceiver module 520 may include a radio frequency module, an antenna module, and the like. For example, the transceiver module 502 may include a pin module and the like.

FIG. 10 is reused. In some other embodiments of this application, the communication apparatus 500 may be configured to perform an action performed by the second communication apparatus in the foregoing method embodiments. In this case, the communication apparatus may be a Wi-Fi device, or a chip, a functional module, or the like that can be configured in the device. The transceiver module 520 is configured to perform a sending/receiving-related operation of the second communication apparatus in the foregoing method embodiments, and the processing module 510 is configured to perform a processing-related operation of the second communication apparatus in the foregoing method embodiments.

For example, the transceiver module 520 may be configured to receive first information, where the first information is obtained through encoding based on a parity check matrix of a target code length. The processing module 510 may be configured to determine the parity check matrix based on a 16*32 base matrix, where the base matrix includes a plurality of first elements, the first element corresponds to a cyclic shift matrix, a position of the first element in a first base matrix is the same as a position of the first element in a second base matrix, the first base matrix is used to determine a parity check matrix corresponding to a first code length, the second base matrix is used to determine a parity check matrix corresponding to a second code length, the target code length includes the first code length or the second code length, the 1^{st} element in the 17^{th} column of the base matrix is zero, and the x^{th} element and the 16^{th} element in the 17^{th} column of the base matrix are same non-zero elements.

For example, the transceiver module 520 may be further configured to input to-be-decoded information. The processing module 510 may further perform LDPC decoding on the to-be-decoded information based on the parity check matrix, to obtain an information bit sequence.

For example, the processing module 510 may include a decoding module. For example, the processing module 510 may further include an obtaining module and the like. For example, the processing module 510 may further include at least one of the following components: a cyclic prefix removal module, a DFT module, a de-interleaving module, a constellation demapping module, and a descrambling module. For example, the transceiver module 520 may include a radio frequency module, an antenna module, and the like. For example, the transceiver module 520 may include a pin module and the like.

Optionally, in the foregoing embodiments, the communication apparatus may further include a storage module. The storage module may be configured to store instructions and/or data. The processing unit 510 may read the instructions and/or the data in the storage module, to cause the communication apparatus to implement the foregoing method embodiments.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus shown in FIG. 10 falls within the protection scope of embodiments of this application. The following descriptions are merely examples, and a product form of the communication apparatus in embodiments of this application is not limited thereto.

In a possible implementation, in the communication apparatus shown in FIG. 10, the processing module 510 may be one or more processors, and the transceiver module 520 may be a transceiver. Alternatively, the transceiver module 520 may be a sending module and a receiving module, the sending module may be a transmitter, the receiving module may be a receiver, and the sending module and the receiving module are integrated into one component, for example, a transceiver. In embodiments of this application, the processor and the transceiver may be coupled, or the like. A manner of connection between the processor and the transceiver is not limited in embodiments of this application. In a process of performing the foregoing method, a process of sending information in the foregoing method may be a process of outputting the information by the processor. When outputting the information, the processor outputs the information to a transceiver, so that the transceiver transmits the information. After the information is outputted by the processor, other processing may further need to be performed before the information arrives at the transceiver. Similarly, a process of receiving information in the foregoing method may be a process of receiving the input information by the processor. When the processor receives the input information, the transceiver receives the information and inputs the information to the processor. Further, after the transceiver receives the information, other processing may need to be performed on the information before the information is input into the processor.

As shown in FIG. 11, the communication apparatus 600 includes one or more processors 620 and a transceiver 610.

In some embodiments of this application, the communication apparatus may be configured to perform steps, methods, or functions performed by the first communication apparatus or a network management server. For example, the processor 620 may be configured to perform functions or steps implemented by the processing module 510 shown in FIG. 10. The transceiver 610 may be configured to perform functions or steps implemented by the transceiver module 520 shown in FIG. 10. For specific descriptions of the processor 620 and the transceiver 610, refer to FIG. 10 or the foregoing method embodiments. Details are not described herein again.

In some embodiments of this application, the communication apparatus is configured to perform steps, methods, or functions performed by the second communication apparatus or a terminal device. For example, the processor 620 may be configured to perform functions or steps implemented by the processing module 510 shown in FIG. 10. The transceiver 610 may be configured to perform functions or steps implemented by the transceiver module 520 shown in FIG. 10. For specific descriptions of the processor 620 and the transceiver 610, refer to FIG. 10 or the foregoing method embodiments. Details are not described herein again.

In each implementation of the communication apparatus shown in FIG. 11, the transceiver may include a receiver and a transmitter. The receiver is configured to perform a receiving function (or operation). The transmitter is configured to perform a transmitting function (or operation). In addition, the transceiver is configured to communicate with another device/apparatus through a transmission medium.

Optionally, the communication apparatus 600 may further include one or more memories 630, configured to store program instructions and/or data. The memory 630 is coupled to the processor 620. The coupling in embodiments of this application is indirect coupling or a communication connection between communication apparatuses, units, or modules for information exchange between the communication apparatuses, units, or modules, and may be in electrical, mechanical, or other forms. The processor 620 may cooperate with the memory 630. The processor 620 may execute the program instructions stored in the memory 630. Optionally, at least one of the one or more memories may be included in the processor.

A specific connection medium between the transceiver 610, the processor 620, and the memory 630 is not limited in embodiments of this application. In embodiments of this application, the memory 630, the processor 620, and the transceiver 610 are connected through a bus 640 in FIG. 11. The bus is represented by using a bold line in FIG. 11. A manner of connection between other components is merely an example for description, and imposes no limitation. The bus may be classified into an address bus, a data bus, a control bus, and the like. For ease of representation, only one bold line is used for representation in FIG. 11, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware and software modules in the processor.

In embodiments of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is, but not limited to, any storage medium that can be used to carry or store program code in a form of instructions or data structures and that can be read or written by a computer (such as the communication apparatus illustrated in this application). The memory in embodiments of this application may alternatively be a circuit or any other apparatus that can implement a storage function, and is configured to store the program instructions and/or the data.

The processor 620 is mainly configured to process a communication protocol and communication data, control the entire communication apparatus, execute a software program, and process data of the software program. The memory 630 is mainly configured to store the software program and the data. The transceiver 610 may include a control circuit and an antenna. The control circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After the communication apparatus is powered on, the processor 620 may read the software program in the memory 630, interpret and execute an instruction of the software program, and process data of the software program. When data needs to be sent in a wireless manner, after performing baseband processing on to-be-sent data, the processor 620 outputs a baseband signal to the radio frequency circuit. After performing radio frequency processing on the baseband signal, the radio frequency circuit sends a radio frequency signal through an antenna in a form of an electromagnetic wave. When data is sent to the communication apparatus, the radio frequency circuit receives a radio frequency signal through the antenna, converts the radio frequency signal into a baseband signal, and outputs the baseband signal to the processor 620. The processor 620 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in embodiments of this application may alternatively have more components than those in FIG. 11, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 10, the processing module 510 may be one or more logic circuits, and the transceiver module 520 may be an input/output interface that is also referred to as a communication interface, an interface circuit, an interface, or the like. Alternatively, the transceiver module 520 may be a sending module and a receiving module. The sending module may be an output interface, and the receiving module may be an input interface. The sending module and the receiving module are integrated into one module, for example, an input/output interface. As shown in FIG. 12, the communication apparatus 700 shown in FIG. 12 includes a logic circuit 710 and an interface 720. In other words, the processing module 510 may be implemented by the logic circuit 710, and the transceiver module 520 may be implemented by the interface 720. The logic circuit 710 may be a chip, a processing circuit, an integrated circuit, a system on chip (system on chip, SoC) chip, or the like. The interface 720 may be a communication interface, an input/output interface, a pin, or the like. For example, FIG. 12 shows an example in which the communication apparatus 700 is a chip. The chip includes the logic circuit 710 and the interface 720.

In embodiments of this application, the logic circuit and the interface may be further coupled to each other. A specific manner of connection between the logic circuit and the interface is not limited in embodiments of this application. For example, the logic circuit 710 may be configured to perform the functions or the steps implemented by the processing module 510 shown in FIG. 10, and the interface 720 may be configured to perform the functions or the steps implemented by the transceiver module 520 shown in FIG. 10. For specific descriptions of the logic circuit 710 and the interface 720, refer to FIG. 10 or the foregoing method embodiments. Details are not described herein again.

The communication apparatus shown in embodiments of this application may implement the methods according to embodiments of this application in a form of hardware, or may implement the methods according to embodiments of this application in a form of software. This is not limited in embodiments of this application.

An embodiment of this application further provides a communication system. The communication system includes a first communication apparatus and a second communication apparatus. The first communication apparatus and the second communication apparatus may be configured to perform the method according to any one of the foregoing embodiments.

In addition, this application further provides a computer program. The computer program is configured to implement operations and/or processing performed by the communication apparatuses in the methods provided in this application.

This application further provides a computer-readable storage medium. The computer-readable storage medium stores computer code. When the computer code is run on a computer, the computer is caused to perform operations and/or processing performed by the communication apparatuses in the methods provided in this application.

This application further provides a computer program product. The computer program product includes computer code or a computer program. When the computer code or the computer program is run on a computer, operations and/or processing performed by the communication apparatuses in the methods provided in this application are/is performed.

In the several embodiments provided in this application, it should be understood that the disclosed system, communication apparatus, and method may be implemented in other manners. For example, the described communication apparatus embodiment is merely an example. For example, the foregoing module division is merely logical function division and there may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the communication apparatuses or modules may be implemented in electrical, mechanical, or other forms.

The modules described as separate parts may or may not be physically separate, and parts displayed as modules may or may not be physical modules, may be located in one place, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, the part contributing to the conventional technologies, or all or some of the technical solutions may be implemented in a form of a software product. The computer software product is stored in a readable storage medium, and includes instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, based on a 16*32 base matrix, a parity check matrix corresponding to a target code length, wherein the base matrix comprises a plurality of first elements, the first element corresponds to a cyclic shift matrix, a position of the first element in a first base matrix is the same as a position of the first element in a second base matrix, the first base matrix is used to determine a parity check matrix corresponding to a first code length, the second base matrix is used to determine a parity check matrix corresponding to a second code length, the target code length comprises the first code length or the second code length, the 1^{st} element in the 17^{th} column of the base matrix is zero, the x^{th} element and the 16^{th} element in the 17^{th} column of the base matrix are same non-zero elements, and x is an integer greater than 1 and less than 16; and
sending first information, wherein the first information is obtained through encoding based on the parity check matrix.

2. The method according to claim 1, wherein the base matrix may be represented as: 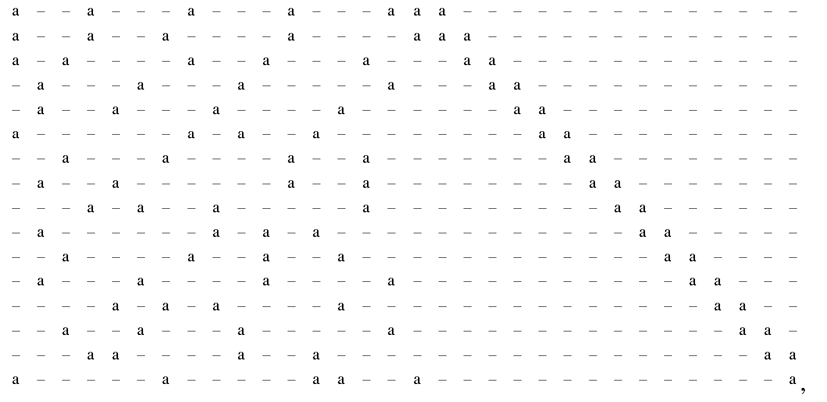 or 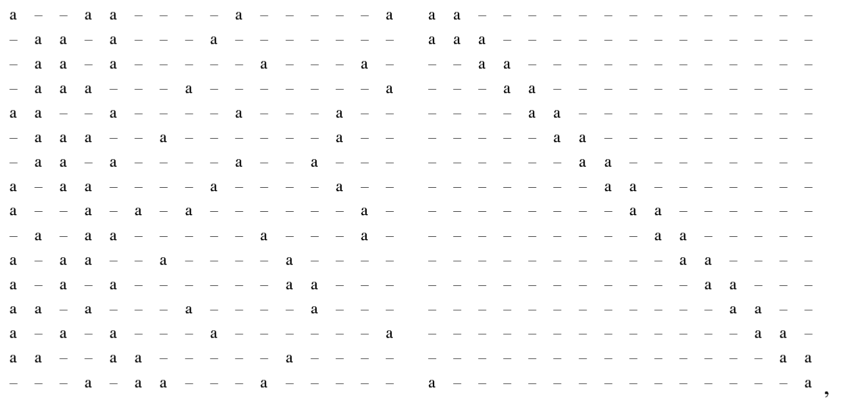 wherein
a indicates presence of a z*z cyclic shift identity matrix at a corresponding element position, z is a lifting factor, and - indicates an all-zero matrix.

3. The method according to claim 1 or 2, wherein z is 10, and the base matrix may be represented as: 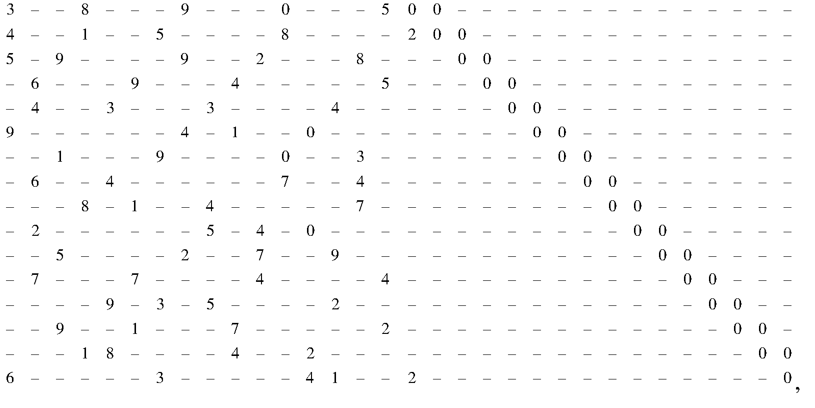 or

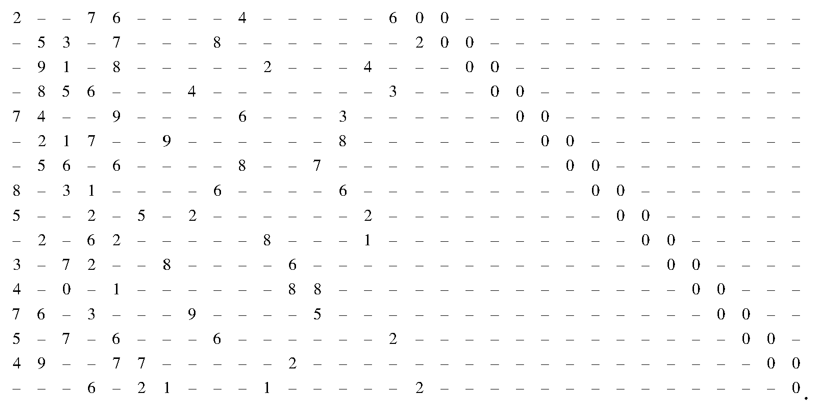

4. The method according to claim 1 or 2, wherein z is 20, and the base matrix may be represented as: 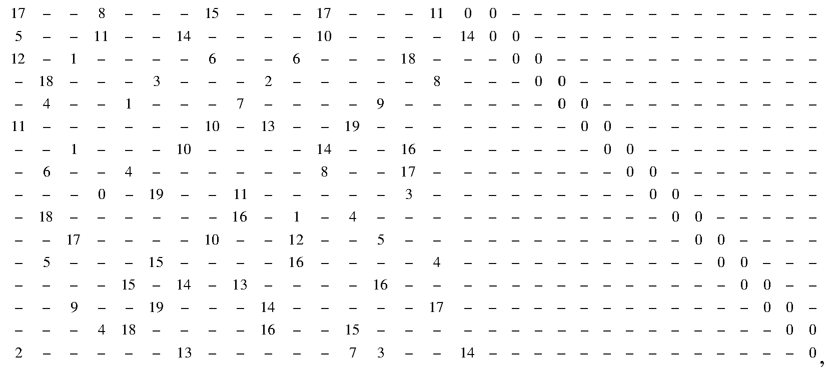 or

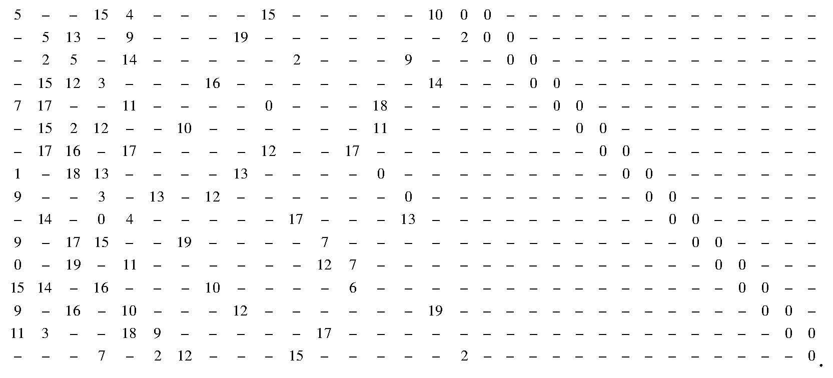

5. The method according to claim 1 or 2, wherein z is 40, and the base matrix may be represented as: 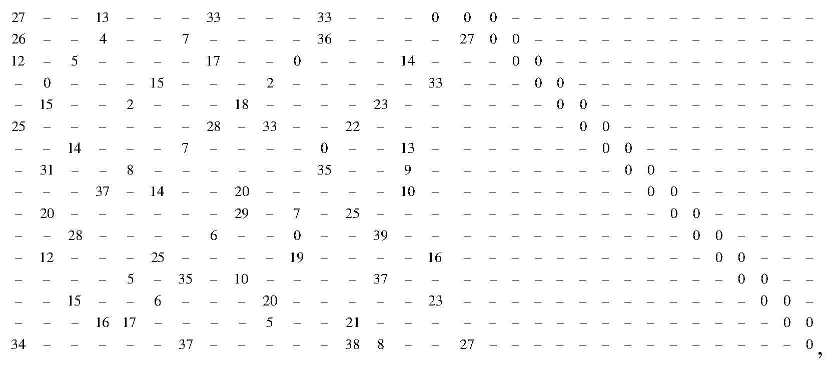 or

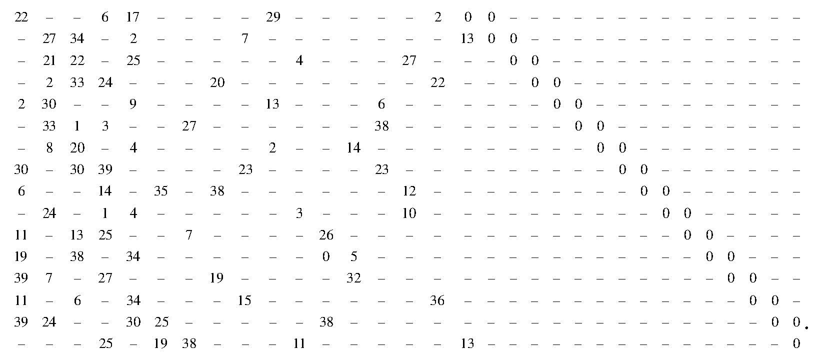

6. The method according to claim 1 or 2, wherein z is 60, and the base matrix may be represented as: 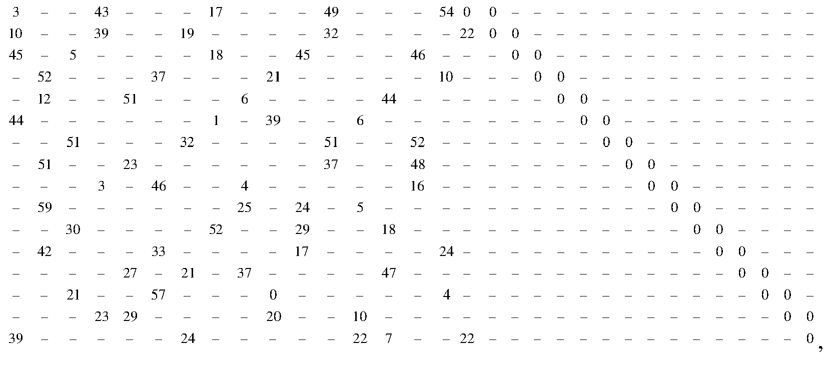 or

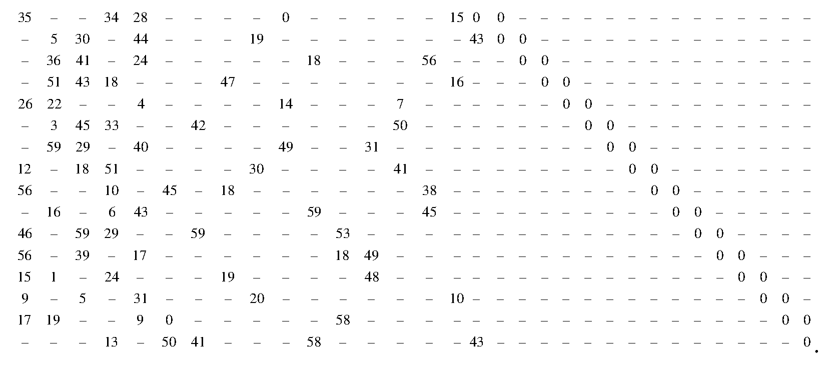

7. The method according to claim 1 or 2, wherein z is 80, and the base matrix may be represented as: 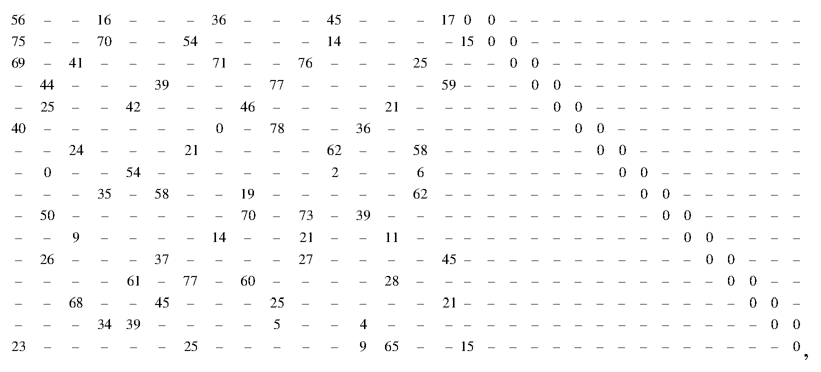 or

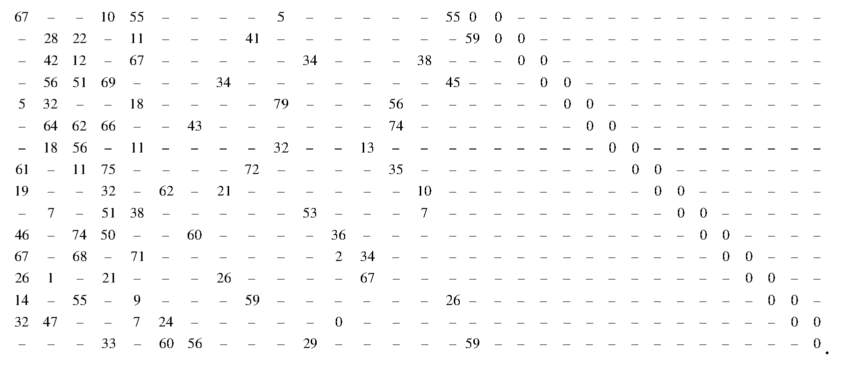

8. A communication method, comprising:
receiving first information, wherein the first information is obtained through encoding based on a parity check matrix of a target code length; and
determining the parity check matrix based on a 16*32 base matrix, wherein the base matrix comprises a plurality of first elements, the first element corresponds to a cyclic shift matrix, a position of the first element in a first base matrix is the same as a position of the first element in a second base matrix, the first base matrix is used to determine a parity check matrix corresponding to a first code length, the second base matrix is used to determine a parity check matrix corresponding to a second code length, the target code length comprises the first code length or the second code length, the 1^{st} element in the 17^{th} column of the base matrix is zero, the x^{th} element and the 16^{th} element in the 17^{th} column of the base matrix are same non-zero elements, and x is an integer greater than 1 and less than 16; and

9. The method according to claim 8, wherein the base matrix may be represented as: 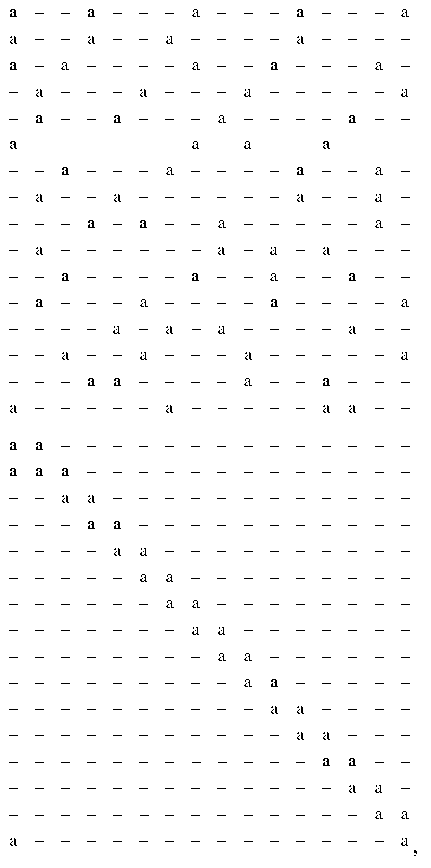 or 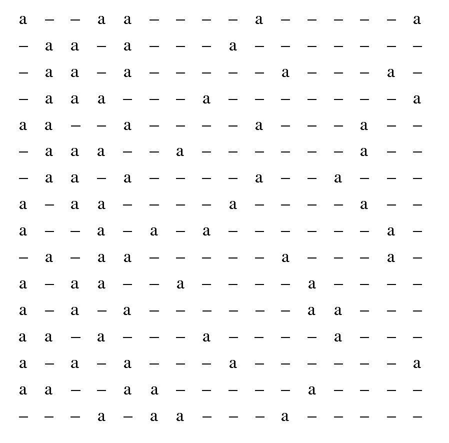 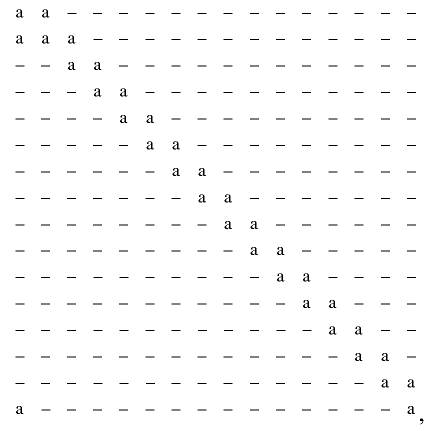 wherein
a indicates presence of a z*z cyclic shift identity matrix at a corresponding element position, z is a lifting factor, and - indicates an all-zero matrix.

10. The method according to claim 8 or 9, wherein z is 10, and the base matrix may be represented as: 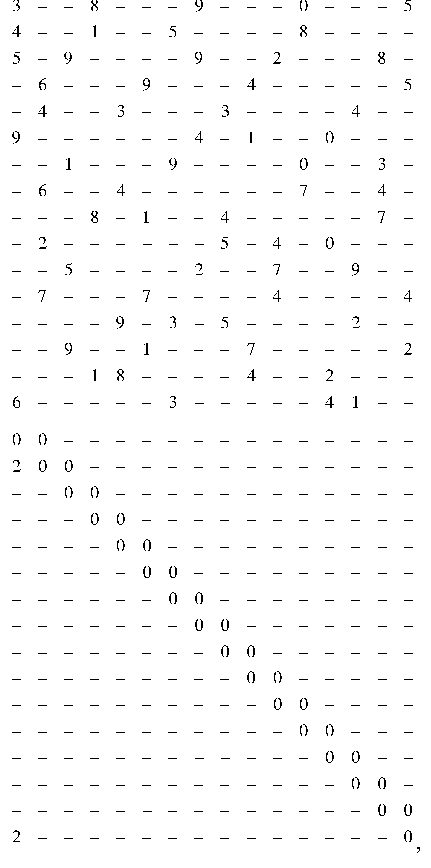 or

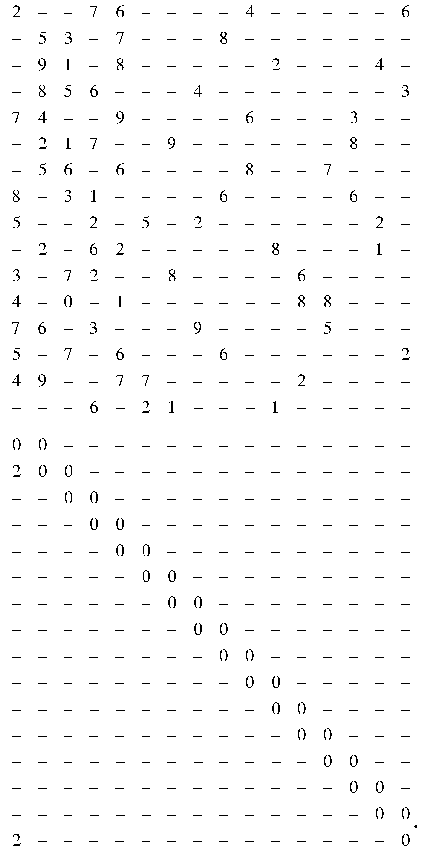

11. The method according to claim 8 or 9, wherein z is 20, and the base matrix may be represented as: 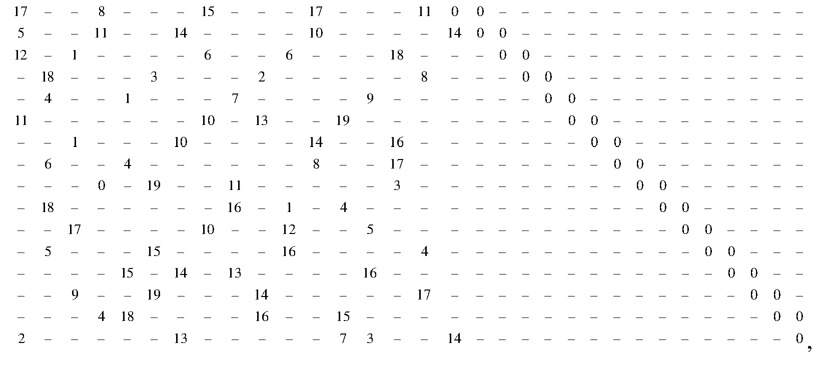 or

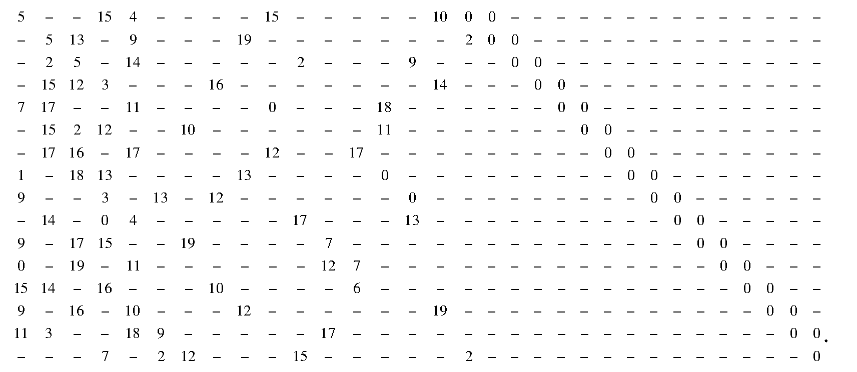

12. The method according to claim 8 or 9, wherein z is 40, and the base matrix may be represented as: 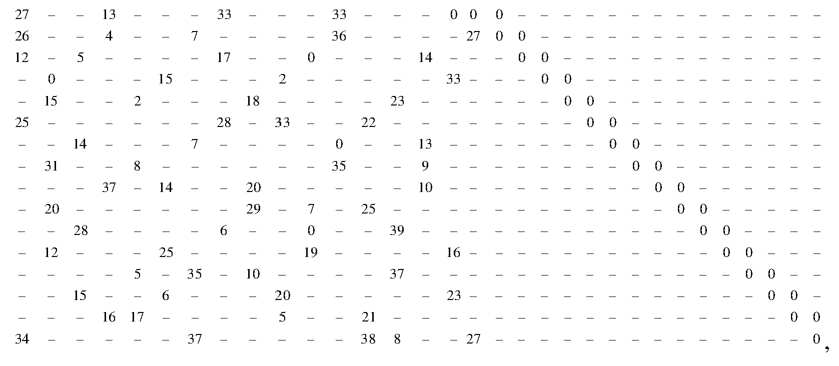 or

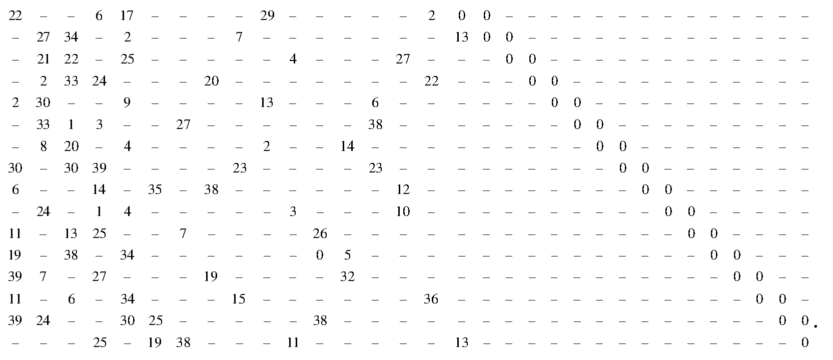

13. The method according to claim 8 or 9, wherein z is 60, and the base matrix may be represented as: 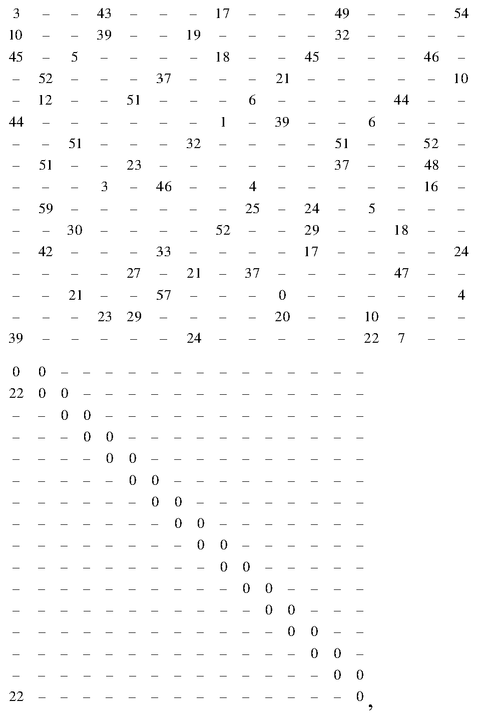 or

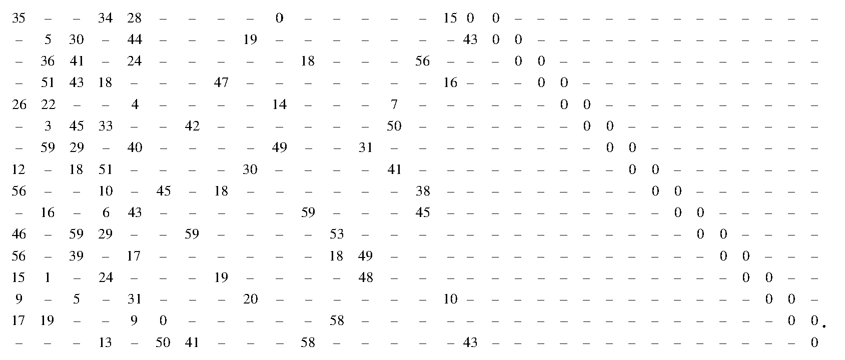

14. The method according to claim 8 or 9, wherein z is 80, and the base matrix may be represented as: 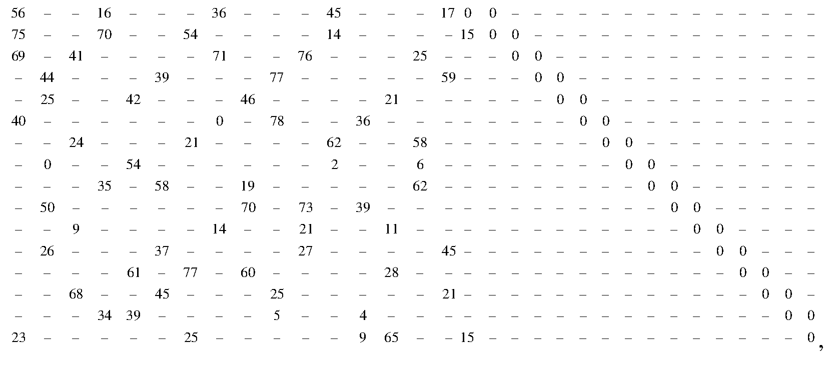 or

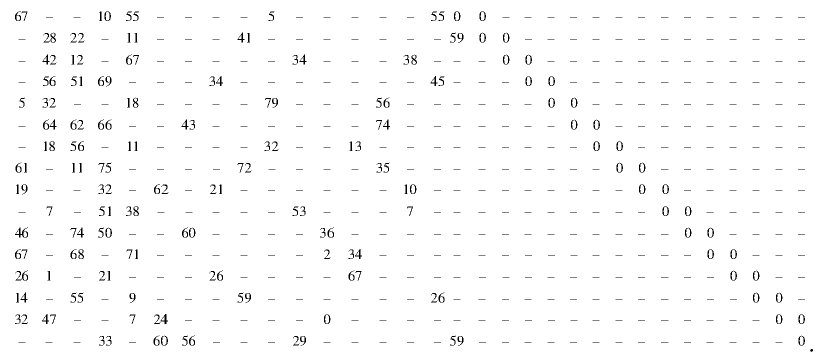

15. A communication apparatus, comprising a module configured to perform the method according to any one of claims 1 to 7, or a module configured to perform the method according to any one of claims 8 to 14.

16. A communication apparatus, comprising a processor, wherein the processor is configured to perform the method according to any one of claims 1 to 14.

17. A communication apparatus, comprising a logic circuit and an interface, wherein the logic circuit is coupled to the interface; and
the interface is configured to input and/or output information, and the logic circuit is configured to perform the method according to any one of claims 1 to 14.

18. A computer-readable storage medium, wherein the computer-readable storage medium is configured to store a computer program, and when the computer program is executed, the method according to any one of claims 1 to 14 is performed.

19. A computer program product, wherein when the computer program product is executed, the method according to any one of claims 1 to 14 is performed.

20. A communication system, wherein the communication system comprises a first communication apparatus and a second communication apparatus, the first communication apparatus is configured to perform the method according to any one of claims 1 to 7, and the second communication apparatus is configured to perform the method according to any one of claims 8 to 14.
